# EUROPEAN PATENT SPECIFICATION

(11) **EP 3 748 629 B1**
(45) Date of publication and mention of the grant of the patent: **06.09.2023**
(21) Application number: 19747243.4
(22) Date of filing: 22.01.2019
(51) Int. Cl.: G10L 15/32, G10L 15/08, G10L 15/02, G10L 15/04, G10L 15/16, G10L 15/26, G10L 15/06

(54) **IDENTIFICATION METHOD FOR VOICE KEYWORDS, COMPUTER-READABLE STORAGE MEDIUM, AND COMPUTER DEVICE**
IDENTIFIKATIONSVERFAHREN FÜR SPRACHSCHLÜSSELWÖRTER, COMPUTERLESBARES SPEICHERMEDIUM UND COMPUTERVORRICHTUNG
PROCÉDÉ D'IDENTIFICATION DE MOTS-CLÉS VOCAUX, SUPPORT DE STOCKAGE LISIBLE PAR ORDINATEUR ET DISPOSITIF INFORMATIQUE

(30) Priority: 31.01.2018 CN 201810096472
(43) Date of publication of application: 09.12.2020
(73) Proprietor: Tencent Technology (Shenzhen) Company Limited, Shenzhen, Guangdong, 518057 (CN)
(72) Inventor: WANG, Jun, Shenzhen, Guangdong 518057 (CN); SU, Dan, Shenzhen, Guangdong 518057 (CN); YU, Dong, Shenzhen, Guangdong 518057 (CN)
(74) Representative: Eisenführ Speiser
(86) International application number: PCT/CN2019/072590
(87) International publication number: WO 2019/149108

(56) References cited:
- CN-A- 102 831 891
- CN-A- 105 679 310
- CN-A- 105 679 316
- CN-A- 107 123 417
- CN-A- 108 305 617
- US-A1- 2011 131 043
- US-A1- 2012 166 194
- US-A1- 2017 053 652
- US-A1- 2017 301 341
- US-B2- 9 754 584

## Description

This application claims priority to Chinese Patent Application No. 201810096472.X, filed with the National Intellectual Property Administration, PRC on January 31, 2018 and entitled "IDENTIFICATION METHOD AND DEVICE FOR VOICE KEYWORDS".

### TECHNICAL FIELD

The present disclosure relates to the field of computer technologies, and in particular, to a speech keyword recognition method, a speech keyword recognition apparatus, a computer-readable storage medium, and a computer device.

### BACKGROUND

With development of speech technologies and improvement of interaction experience, users are increasingly turning to using speeches for interacting with an electronic device, for example, for controlling the electronic device to perform a designated operation through the speech. An exemplary speech recognition apparatus and a corresponding method are disclosed in US 2017/0053652 A1. Speech keyword recognition is used for recognizing whether a continuous speech signal includes a pre-determined keyword, and is widely applied to aspects such as electronic device wakeup, dialog interaction interface initialization, audio indexing and retrieval, and speech password authentication.

In a conventional speech keyword recognition method, acoustic characteristics are first extracted from a to-be-recognized speech signal, the acoustic characteristics are inputted into a deep neural network model that is trained in advance, and then whether the speech signal includes a pre-determined keyword is determined based on a probability outputted by the deep neural network model and a manually set decision logic. However, the conventional method is sensitive to the manually set decision logic. Generally, whenever an application scenario or the pre-determined keyword changes, the decision logic needs to be carefully tuned manually, to adapt to a new application scenario. Therefore, the conventional method is less universal.

### SUMMARY

A speech keyword recognition method, a speech keyword recognition apparatus, a computer-readable storage medium, and a computer device are provided according to the embodiments of the present disclosure.

A speech keyword recognition method performed by a user terminal or a server is provided, which includes operations:
determining first speech segments based on a to-be-recognized speech signal;
determining a first probability corresponding to each of the first speech segments by using a preset first classification model, the first probability including a probability, for each of pre-determined word segmentation units of a pre-determined keyword, that the first speech segment corresponds to the respective pre-determined word segmentation unit;
determining second speech segments based on the to-be-recognized speech signal, and generating a first prediction characteristic of each of the second speech segments based on first probabilities corresponding to first speech segments that correspond to the second speech segment;
performing classification based on the first prediction characteristic by using a preset second classification model, to determine a second probability corresponding to each of the second speech segments, the second probability includ ing at least one of a probability that the second speech segment corresponds to the pre-determined keyword and a probability that the second speech segment does not correspond to the pre-determined keyword; and
determining, based on the second probability, whether the to-be-recognized speech signal includes the pre-determined keyword.

A computer-readable storage medium stores a computer program, the computer program, when executed by a processor, causing the processor to perform the operations of the above method

A computer device includes a memory and a processor, the memory storing a computer program, the computer program, when executed by the processor, causing the processor to perform the operations of the above method.

Details of one or more embodiments of the present disclosure are described in the following accompanying drawings and descriptions. Other features, objectives, and advantages of the present disclosure will become apparent from the specification, the accompanying drawings, and the claims.

### BRIEF DESCRIPTION OF THE DRAWINGS

To describe the technical solutions in the embodiments of the present disclosure more clearly, the following briefly describes the accompanying drawings required for describing the embodiments. Obviously, the accompanying drawings in the following descriptions are merely some embodiments of the present disclosure, and a person of ordinary skill in the art may further obtain other accompanying drawings according to the accompanying drawings without creative efforts.
FIG. 1 is a diagram of an application environment of a speech keyword recognition method according to an embodiment.
FIG. 2 is a schematic flowchart of a speech keyword recognition method according to an embodiment.
FIG. 3 is a schematic diagram of a topological structure of a CNN model according to an embodiment.
FIG. 4 is a schematic architectural diagram of a speech keyword recognition system according to an embodiment.
FIG. 5 is a schematic diagram of a spectrum of a speech signal and corresponding first probabilities according to an embodiment.
FIG. 6 is a schematic flowchart of performing initial determination based on a pre-determined decision logic according to an embodiment.
FIG. 7 is a schematic flowchart of steps added based on FIG. 6 according to an embodiment.
FIG. 8 is a schematic flowchart of performing initial determination based on a pre-determined decision logic according to an embodiment.
FIG. 9 is a schematic flowchart of a method for training a first classification model according to an embodiment.
FIG. 10 is a schematic flowchart of a method for training a second classification model according to an embodiment.
FIG. 11 is a schematic flowchart of a speech keyword recognition method according to another embodiment.
FIG. 12 is a block diagram showing a structure of a speech keyword recognition apparatus according to an embodiment.
FIG. 13 is a block diagram showing a structure of a computer device according to an embodiment.
FIG. 14 is a block diagram showing a structure of a computer device according to an embodiment.

### DESCRIPTION OF EMBODIMENTS

To make the objectives, technical solutions, and advantages of the present disclosure clearer and more understandable, the present disclosure is further described in detail below with reference to accompanying drawings and embodiments. It is to be understood that the specific embodiments described herein are merely used for explaining the present disclosure, and are not used for limiting the present disclosure.

Unless otherwise defined, meanings of all technical and scientific terms used in this specification are the same as that usually understood by a person skilled in the art to which the present disclosure belongs. In the present disclosure, terms used in the specification of the present disclosure are merely intended to describe objectives of the specific embodiments, but are not intended to limit the present disclosure.

Terms such as "first" and "second" used in the present disclosure are used for distinguishing similar objects from names. However, these objects are not limited by these terms. These terms may be exchanged in a proper case without departing from the scope of the present invention, provided that the resulting subject-matter still falls under the scope of the appended claims.

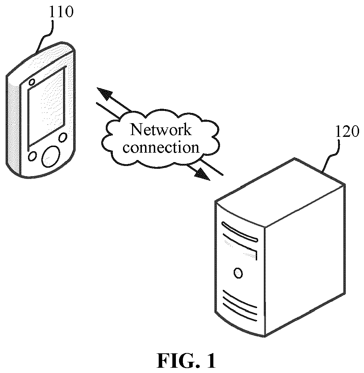

A speech keyword recognition method according to the embodiments of the present disclosure may be applied to an application environment shown in FIG. 1. The application environment may involve a user terminal 110 and a server 120. The user terminal 110 may communicate with the server 120 through a network.

The user terminal 110 obtains a to-be-recognized speech signal, and transmits the to-be-recognized speech signal to the server 120 through the network. The server 120 determines first speech segments based on the to-be-recognized speech signal, and determines a first probability corresponding to each of the first speech segments by using a preset first classification model, where the first probability includes a probability that the first speech segment corresponds to each of pre-determined word segmentation units of a pre-determined keyword. Then, the server 120 determines second speech segments based on the to-be-recognized speech signal, and generates a first prediction characteristic of each of the second speech segments based on first probabilities corresponding to first speech segments that correspond to the second speech segment. Next, the server 120 performs classification based on the first prediction characteristic by using a preset second classification model, to determine a second probability corresponding to each of the second speech segments, where the second probability includes at least one of a probability that the second speech segment corresponds to the pre-determined keyword and a probability that the second speech segment corresponds to the pre-determined keyword. Then, the server determines, based on the second probability, whether the to-be-recognized speech signal includes the pre-determined keyword.

In other embodiments, operations from determining the to-be-recognized speech signal to determining, based on the second probability, whether the to-be-recognized speech signal includes the pre-determined keyword may alternatively be performed by the user terminal 110 without participation of the server 120.

The user terminal 110 may be a mobile terminal or a desktop terminal, and the mobile terminal may include at least one of a mobile phone, a sound box, a robot, a tablet computer, a notebook computer, a personal digital assistant, and a wearable device. The server 120 may be implemented by using an independent physical server or a server cluster formed by multiple physical servers.

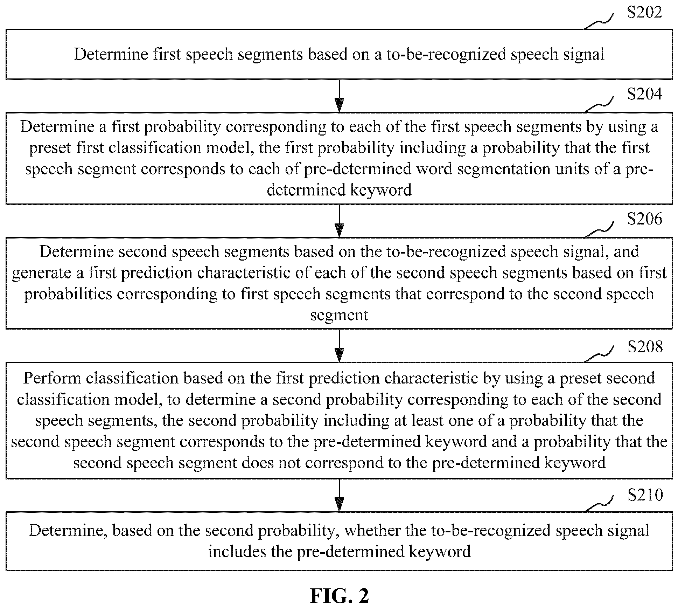

In an embodiment, as shown in FIG. 2, a speech keyword recognition method is provided. Description is made by using an example in which the method is performed by a computer device (the user terminal 110 or the server 120 shown in FIG. 1). The method may include the following steps S202 to S210.

In step S202, first speech segments are determined based on a to-be-recognized speech signal.

The to-be-recognized speech signal refers to a speech signal that whether the speech signal includes a pre-determined keyword is to be determined. In an actual application, generally, a user may issue a sound signal according to an actual requirement (for example, the user says a sentence), the computer device collects the sound signal, and converts the sound signal into an electrical signal, to obtain the to-be-recognized speech signal.

The first speech segments refer to first splicing frame sequences corresponding to unit frames in the to-be-recognized speech signal. Specifically, after determining the to-be-recognized speech signal, the computer device first performs framing processing on the to-be-recognized speech signal, to determine unit frames, that is, determining multiple segments by segmenting the to-be-recognized speech signal. Each segment is one unit frame. Then, the computer device may obtain, based on a pre-determined first splicing rule, first spliced frame sequences, that is, the first speech segments that are in a one-to-one correspondence with the unit frames.

In an embodiment, the framing processing may be implemented by moving a window function. For example, a window function having a frame window length of 25ms and a window shift of 10ms is used for performing the framing processing, to determine unit frames each having a length of 25ms, with an overlapping portion of 15ms between two adjacent unit frames.

In an embodiment, for any one of the unit frames, a first preset number of unit frames preceding the unit frame, the unit frame, and a second preset number of unit frames following the unit frame may be spliced based on a position of the unit frame appears in the to-be-recognized speech signal, to determine a first speech segment corresponding to the unit frame.

The first preset number and the second preset number may be set based on lengths of pre-determined word segmentation units of the pre-determined keyword corresponding to a preset first classification model. For example, the pre-determined keyword is "er duo", and the pre-determined word segmentation units of the pre-determined keyword corresponding to the first classification model are respectively "er" and "duo". In this case, the first preset number may be set to 10, and the second preset number may be set to 5. For any one of the unit frames, 10 frames preceding the unit frame, the unit frame, and 5 frames following the unit frame may be spliced. The first speech segment obtained through splicing corresponding to the unit frame includes the 16 unit frames.

It is to be noted that, if the to-be-recognized speech signal includes N unit frames, the N unit frames includes a first unit frame, a second unit frame, a third unit frame, ..., and an N^{th} unit frame from front to back in an order in which the unit frames appears in the to-be-recognized speech signal. For a unit frame, if the total number of unit frames preceding the unit frame is less than the first preset number, the first unit frame may be duplicated, to make up the first preset number of frames. For example, if the first preset number of frames is 10, and the second preset number of frames is 5, a first speech segment corresponding to the first unit frame may include 11 first unit frames, and the second to sixth unit frames, making up 16 unit frames in total. A first speech segment corresponding to the third unit frame may include 9 first unit frames, and the second to eighth unit frames, making up 16 unit frames in total.

Similarly, for a unit frame, if the total number of unit frames following the unit frame is less than the second preset number, the N^{th} unit frames may be duplicated, to make up the second preset number of frames.

In S204, a first probability corresponding to each of the first speech segments is determined by using a preset first classification model.

The first classification model is a neural network model that is trained in advance. The acoustic characteristic of the first speech segments may be inputted into the first classification model. Then, classification processing is performed on the first speech segments based on the acoustic characteristics of the first speech segments by using the first classification model, to determine the first probabilities that are in a one-to-one correspondence with the first speech segments. The first probability corresponding to each of the first speech segments may include a probability that the first speech segment corresponds to each of the pre-determined word segmentation units of the pre-determined keyword. The first probabilities may be posterior probabilities.

An acoustic characteristic of a first speech segment may include acoustic characteristics of unit frames included in the first speech segment. In an embodiment, the acoustic characteristic of the first speech segment is an eigenvector having a dimension of *t* × *f* . *t* represents a time frame dimension, that is, the total number of unit frames included in the first speech segment, and *f* represents a frequency spectrum dimension, that is, a dimension of an acoustic characteristic of each unit frame.

An acoustic characteristic of a unit frame is determined by performing acoustic characteristic extraction on the unit frame. Specifically, a waveform corresponding to a unit frame is converted into a multi-dimensional vector. The multi-dimensional vector may be used for characterizing content information included in the unit frame, and may be an acoustic characteristic of the unit frame. The acoustic characteristic of the unit frame may include any one of or a combination of any two or more of a Mel spectrum, a logarithmic Mel spectrum (determined by performing a logarithmic operation on the Mel spectrum), a Mel frequency cepstrum coefficient (MFCC) and the like. Using an example in which the logarithmic Mel spectrum is extracted as the acoustic characteristic from a unit frame, a 40-dimension vector corresponding to the unit frame may be determined.

Using an example in which the first speech segments each include 16 unit frames and the acoustic characteristic extracted from each of the unit frames is a 40-dimension logarithmic Mel spectrum characteristic, *t* = 16, and *f* = 40, that is, the acoustic characteristic of each of the first speech segments include a vector having a dimension of 16 × 40.

The pre-determined word segmentation units may be determined by performing word segmentation processing on a pre-determined keyword according to a pre-determined word segmentation manner. Using an example in which the pre-determined keyword is "er duo" and the pre-determined word segmentation manner is syllable, pre-determined word segmentation units of the pre-determined keyword "er duo" may be respectively "er" and "duo". Correspondingly, for any one of the first speech segments, a first probability that corresponds to the first speech segment and that is outputted by the first classification model may include a probability that the first speech segment corresponds to "er", and a probability that the first speech segment corresponds to "duo". For another example, if the pre-determined keyword is "xiao lan jing ling", and the pre-determined word segmentation manner is syllable, pre-determined word segmentation units of the pre-determined keyword "xiao lanjing ling" may be respectively "xiao", "lan", "jing", and "ling". For any one of the first speech segments, a first probability that corresponds to the first speech segment and that is outputted by the first classification model may include a probability that the first speech segment corresponds to "xiao", a probability that the first speech segment corresponds to "lan", a probability that the first speech segment corresponds to "jing", and a probability that the first speech segment corresponds to "ling".

In an embodiment, in addition to the probability that the first speech segment corresponds to each of the pre-determined word segmentation units, the first probability may further include a probability that the first speech segment corresponds to first padding information. The first padding information refers to information other than the pre-determined word segmentation units. For example, for a case in which the pre-determined word segmentation units are respectively "er" and "duo", all information other than "er" and "duo" is the first padding information. For another example, for a case in which the pre-determined word segmentation units are respectively "xiao", "lan", "jing", and "ling", all information other than "xiao", "lan", "jing", and "ling" is the first padding information.

In a case in which the first probability includes the probability that the first speech segment corresponds to each of the pre-determined word segmentation units and the probability that the first speech segment corresponds to the first padding information, for any one of the first speech segments, a sum of probabilities included in the first probability corresponding to the first speech segment may be 1.

In an embodiment, the first classification model may be a convolutional neural network (CNN), a long short-term memory (LSTM), a time-delay neural network (TDNN), or a gated convolutional neural network.

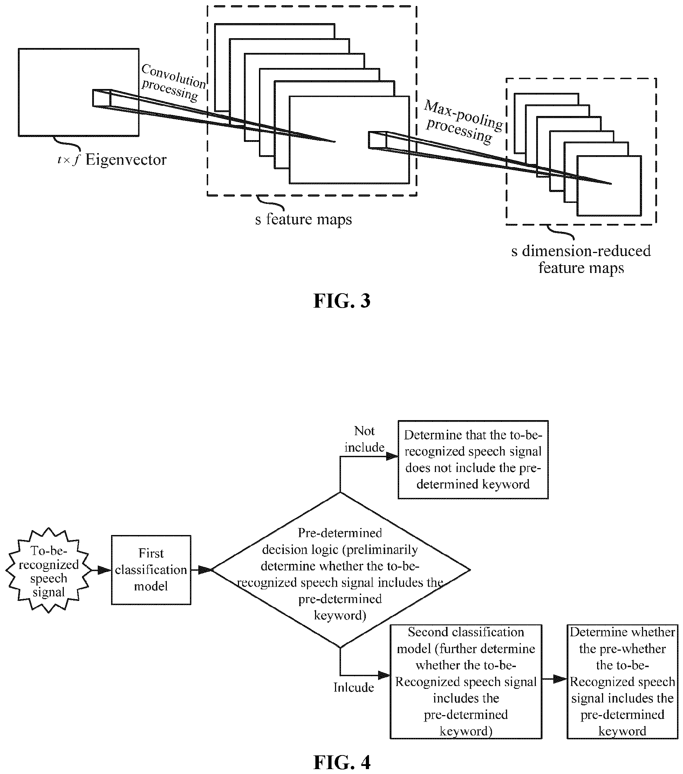

Description is made by using an example in which the first classification model is the CNN, and the CNN may include a convolutional layer, a max-pooling layer, a fully connected layer, and a softmax layer. As described above, input information of the first classification model is the acoustic characteristic of the first speech segment (that is, an eigenvector having a dimension of *t* × *f* ). As shown in FIG. 3, convolution processing may be performed on the eigenvector having a dimension of *t* × *f* corresponding to the first speech segment and a convolution kernel (that is, a filtering weight matrix) having a dimension of *s*×*v*×*w* by using the convolutional layer, to determine *s* feature maps. *v* is a size of a time frame dimension of each convolution kernel, and *ν* ≤ *t. r* is a size of a spectrum dimension of each convolution kernel, and *w* ≤ *f* . *s* is the number of convolution kernels, that is, for the CNN, there are a total of *s* convolution kernels each having a dimension of *ν*×*w*. Then, max-pooling processing (that is, processing of selecting a maximum feature point in a neighborhood, that is, sampling processing) is performed on each of the *s* feature maps by using the max-pooling layer, to reduce the size of the time frequency dimension, and determine *s* dimension-reduced feature maps. Then, classification processing is performed on the *s* dimension-reduced feature maps by using the fully connected layer, and outputs of the fully connected layer are fed into the softmax layer. After that, normalization processing is performed on the outputs of the fully connected layer by using the softmax layer, to determine the first probability corresponding to the first speech segment.

In an embodiment, to balance network complexity and system performance, one convolutional layer may be used in the CNN, and the size of the time frame dimension of the convolution kernel is set to be the same as the size of the time frame dimension of an input feature, that is, *v* = *t* = 16 . In addition, 5 fully connected layers may be further used in the CNN. The first four layers include 512 hidden layers, and the last layer includes 128 hidden layers.

In step S206, second speech segments are determined based on the to-be-recognized speech signal, and a first prediction characteristic of each of the second speech segments is generated based on first probabilities corresponding to first speech segments that correspond to the second speech segment.

The second speech segments refer to second spliced frame sequences corresponding to the unit frames in the to-be-recognized speech signal. Similar to the first speech segments, the computer device may obtain, based on a pre-determined second splicing rule, second spliced frame sequences that are in a one-to-one correspondence with the unit frames, that is, the second speech segments.

In an embodiment, for any one of the unit frames, a third preset number of unit frames preceding the unit frame, the unit frame, and a fourth preset number of unit frames following the unit frame may be spliced based on a position of the unit frame appears in the to-be-recognized speech signal, to determine a second speech segment corresponding to the unit frame.

The third preset number and the fourth preset number may be set based on a length of a pre-determined keyword. Using an example in which the pre-determined keyword is "er duo", the third preset number may be set to 40, and the fourth preset number may be set to 20. For any one of the unit frames, 40 unit frames preceding the unit frame, the unit frame, and 20 unit frames following the unit frame are spliced. The second speech segment obtained through splicing corresponding to the unit frame includes the 61 unit frames.

It is to be noted that, the total number of unit frames included in the second speech segments is greater than that of unit frames included in the first speech segments. Therefore, compared with the first speech segments, the second speech segments include more "context" information.

The first prediction characteristic of each of the second speech segments may be generated based on first probabilities corresponding to first speech segments that correspond to the second speech segment. In an embodiment, the first prediction characteristic of the second speech segment may include first probabilities corresponding to first speech segments that are in a one-to-one correspondence with unit frames included in the second speech segment. For example, the second speech segment includes 61 unit frames. Each of the 61 unit frames included in the second speech segment corresponds to one first speech segment. Therefore, the second speech segment corresponds to 61 first speech segments, and the first speech segments each corresponds to one first probability. Therefore, the first prediction characteristic of the second speech segment includes first probabilities corresponding to the 61 first speech segments that correspond to the second speech segment.

For example, the second speech segment includes 61 unit frames, the pre-determined keyword is "er duo", the pre-determined word segmentation units are respectively "er" and "duo", and the first probability outputted by the first classification model include a probability that the first speech segment corresponds to "er", a probability that the first speech segment corresponds to "duo", and the probability that the first speech segment corresponds to first padding information. In this case, the first prediction characteristic of each of the second speech segments may include a vector having a dimension of 61×3.

In step S208, classification is performed based on the first prediction characteristic by using a second classification model, to determine a second probability corresponding to each of the second speech segments.

The second classification model is also a neural network model that is trained in advance. The first prediction characteristic of each of the second speech segments may be inputted into the second classification model. Then, classification processing is performed on the second speech segments based on the first prediction characteristics of the second speech segments by using the second classification model, to determine the second probability corresponds to each of the second speech segments. The second probability corresponding to the second speech segment may include at least one of a probability that the second speech segment corresponds to the pre-determined keyword and a probability that the second speech segment does not correspond to the pre-determined keyword. Similar to the first probability, the second probability may be a posterior probability.

In an embodiment, the second probability may include only the probability that the second speech segment corresponds to the pre-determined keyword. Using an example in which the pre-determined keyword is "er duo", the second probability corresponding to the second speech segment may include a probability that the second speech segment corresponds to "er duo". Using an example in which the pre-determined keyword is "xiao lan jing ling", the second probability corresponding to the second speech segment may include a probability that the second speech segment corresponds to "xiao lan jing ling".

In another embodiment, the second probability may include only the probability that the second speech segment does not correspond to the pre-determined keyword. Using an example in which the pre-determined keyword is "er duo", the second probability corresponding to the second speech segment may include only a probability that the second speech segment corresponds to information other than "er duo".

In still another embodiment, the second probability may include both the probability that the second speech segment corresponds to the pre-determined keyword, and the probability that the second speech segment does not correspond to the pre-determined keyword. In this case, a sum of probabilities included in the second probability corresponding to the second speech segment may be 1.

In an embodiment, the second classification model may be a convolutional neural network (CNN), a long short-term memory (LSTM), a time-delay neural network (TDNN), a gated convolutional neural network, or a fully connected deep neural network (FCDNN), or the like.

In addition, in a case that the fully connected deep neural network (FCDNN) is used in the second classification model, the neural network may include two fully connected layers. The fully connected layers each include 128 nodes, thereby reducing complexity while ensuring system performance.

In step S210, it is determined, based on the second probability, whether the to-be-recognized speech signal includes the pre-determined keyword.

After the second probabilities are determined, the second probabilities that are in a one-to-one correspondence with the second speech segments may be compared with a pre-determined probability threshold one by one. In an embodiment, the second probabilities that are in a one-to-one correspondence with the second speech segments may be compared with the pre-determined probability threshold one by one from front to back based on an order in which the unit frames corresponding to the second speech segments are arranged in the to-be-recognized speech signal.

In an embodiment, comparing the second probability with the pre-determined probability threshold may be specifically determining whether the probability that the second speech segment corresponds to the pre-determined keyword or the probability that the second speech segment does not correspond to the pre-determined keyword that are included in the second probability is greater than the corresponding pre-determined probability threshold.

Using the determining whether the probability that the second speech segment corresponds to the pre-determined keyword and that are included in the second probability is greater than the pre-determined probability threshold as an example, a process of determining, based on the determined second probability, whether the to-be-recognized speech signal includes the pre-determined keyword includes:

If a probability that the 1st second speech segment (a second speech segment corresponding to the foremost unit frame of the to-be-recognized speech signal) corresponds to the pre-determined keyword is greater than the pre-determined probability threshold, it is determined that the 1st first speech segment includes the pre-determined keyword, a recognition result representing that the to-be-recognized speech signal includes the pre-determined keyword is outputted, and a recognition process ends. Otherwise, if the probability that the 1st first speech segment corresponds to the pre-determined keyword is less than the pre-determined probability threshold, it is determined that the 1st second speech segment does not include the pre-determined keyword. Then, a probability that the 2nd second speech segment corresponds to the pre-determined keyword is compared with the pre-determined probability threshold. The rest is deduced by analogy. When a probability that a second speech segment corresponds to the pre-determined keyword is greater than the pre-determined probability threshold, it is determined that the second speech segment includes the pre-determined keyword, a recognition result representing that the to-be-recognized speech signal includes the pre-determined keyword is outputted, and the recognition process ends. If a probability that the second speech segment corresponds to the pre-determined keyword is less than the pre-determined probability threshold until the recognition process is performed for the last second speech segment, it is determined that he to-be-recognized speech signal does not include the pre-determined keyword, a recognition result representing that the to-be-recognized speech signal does not include the pre-determined keyword is outputted, and the recognition process ends.

In the foregoing speech keyword recognition method, after the first probability corresponding to each of the first speech segments of the to-be-recognized speech signal is determined based on the first classification model, whether the to-be-recognized speech signal includes the pre-determined keyword does not need to be finally determined based on the manually set decision logic. The second speech segments are determined based on the to-be-recognized speech signal, and the prediction characteristic of each of the second speech segment is generated based on the first probabilities respectively corresponding to the first speech segments that correspond to the second speech segment. The prediction characteristic is inputted into the second classification model, to determine at least one of the probability that the second speech segment corresponds to the pre-determined keyword and the probability that the second speech segment does not correspond to the pre-determined keyword, and then whether the to-be-recognized speech signal includes the pre-determined keyword is finally determined based on the probability outputted by the second classification model. Therefore, a problem that the conventional method is sensitive to a manually set decision logic can be effectively overcome, thereby improving universality.

In addition, a conventional solution is sensitive to a pre-determined decision logic also limits flexible development and fast launch of a product, and a system generalization ability is poor. Correspondingly, in the foregoing speech keyword recognition method, the foregoing limitation can be reduced, and the system generalization ability can be improved.

It is to be noted that, for speech keyword recognition, a recall rate and a misrecognition rate are two important indexes for evaluating system performance. The recall rate is used for representing a proportion by which a positive class is recognized as a true positive class. The misrecognition rate is used for representing a proportion by which a negative class is recognized as a positive class. When the speech keyword recognition is applied to an electronic device wakeup scenario, a low misrecognition rate indicates that when the to-be-recognized speech signal does not includes the pre-determined keyword, a probability of wrongly recognizing that the to-be-recognized speech signal includes the pre-determined keyword is low.

Generally, to achieve a better balance between the recall rate and the misrecognition rate of the system, a keyword usually needs to be deliberately set. One important setting condition is that a length of the pre-determined keyword needs to be great enough, and syllables or phonemes included in the pre-determined keyword need to be rich enough. For example, the pre-determined keyword includes at least four syllables or at least five phonemes, such as "Okay Goggle", "Tmall Genie", "Hello Xiao Ya", "Ding Dong Ding Dong", "Xiao Ai Tong Xue", and "Hello TV". In the conventional solution, barely satisfactory system performance can be achieved only when the pre-determined keyword is relatively long and a background environment of the to-be-recognized speech signal is quiet.

However, in the embodiments of the present disclosure, the pre-determined keyword is recognized in two levels by using the first classification model and the second classification model. The first probabilities that are in a one-to-one correspondence with the first speech segments are first determined, and then the second probabilities that are in a one-to-one correspondence with the second speech segments are determined based on first probabilities corresponding to first speech segments that correspond to each second speech segment. The second speech segments include more "context" information, so that recognition accuracy can be effectively improved. In addition, the solutions in the embodiments of the present disclosure not only can be well applied to a case in which a keyword is relatively long and the background environment is quiet, but also can achieve a better balance between the recall rate and the misrecognition rate of the system in a case in which the pre-determined keyword is relatively short and the background environment of the to-be-recognized speech signal is an actual far-talking environment.

In an embodiment, in a case of determining, based on the first probability and a pre-determined decision logic, that the to-be-recognized speech signal includes the pre-determined keyword, the operation of determining second speech segments based on the to-be-recognized speech signal is performed.

In this embodiment, as shown in FIG. 4, after the first probability outputted by the first classification model is obtained, and before the second speech segments are determined based on the to-be-recognized speech signal, whether the to-be-recognized speech signal includes the pre-determined keyword may be preliminarily determined based on the first probabilities and a pre-determined decision logic. Only when it is preliminarily determined that the pre-determined keyword is included, the operation of determining second speech segments based on the to-be-recognized speech signal is performed. Otherwise, when it is preliminarily determined that the pre-determined keyword is not included, a recognition result representing that the to-be-recognized speech signal does not include the pre-determined keyword may be outputted, and the recognition process ends. In an embodiment, the decision logic may be implemented based on a hidden Markov model (HMM).

In this embodiment, the preliminary determination operation is added, and only when it is preliminarily determined, based on the pre-determined decision logic, that the pre-determined keyword is included, a second classification model is used for performing classification processing. On one hand, recognition accuracy can be improved by using dual determination. On the other hand, for a to-be-recognized speech signal that does not include the pre-determined keyword, the recognition process ends early, and the second classification model does not need to be used for performing the classification processing, thereby avoiding unnecessary operations, such that system performance can be effectively optimized.

In addition, the system may achieve a relatively low false negative rate by using the pre-determined decision logic (therefore, when the to-be-recognized speech signal includes the pre-determined keyword, a probability of wrongly recognizing that the pre-determined keyword is not included is low). For example, in an actual application, the false negative rate of the system may be below 0.05. It is to be noted that, in a process of performing the preliminary determination based on the pre-determined decision logic, the false positive rate may not be considered, and the second classification network is used for optimizing the false positive rate for the structure of the pre-determined decision logic.

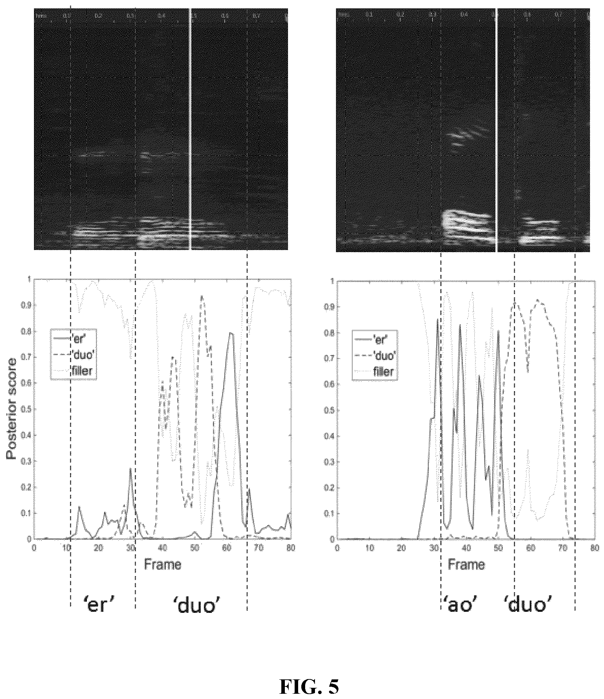

In an actual application, when the pre-determined keyword is "er duo", a speech signal A corresponds to "er duo", and a speech signal B corresponds to "ao duo". After the speech signal A is classified by using the first classification model, outputted first probabilities are shown by using vertical ordinates of a coordinate axis on the left of FIG. 5. After the speech signal B is classified by using the first classification model, outputted first probabilities are shown by using vertical ordinates of a coordinate axis on the right of FIG. 5. In addition, the white line in the spectrum graph on the left of FIG. 5 indicates a position of the pre-determined keyword in the speech signal A that are recognized based on the first probabilities and the pre-determined decision logic. The white line in the spectrum graph on the right of FIG. 5 indicates a position of the pre-determined keyword in the speech signal B that are recognized based on the first probabilities and the pre-determined decision logic. It can be known that misrecognition (for the speech signal B that does not includes the pre-determined keyword, it is recognized that the speech signal B includes the pre-determined keyword) may still occur when preliminary determination is performed based on only the first classification model and the pre-determined decision logic. However, in this embodiment, after it is preliminarily determined that the to-be-recognized speech signal includes the pre-determined keyword by using the pre-determined decision logic, recognition is further performed based on the second classification model. Therefore, the misrecognition can be effectively reduced, thereby improving the recognition accuracy.

In an embodiment, the pre-determined word segmentation units of the pre-determined keyword included in the to-be-recognized speech signal are separately detected, and it is determined whether the pre-determined word segmentation units in the to-be-recognized speech signal are arranged in the same order as in the pre-determined keyword.

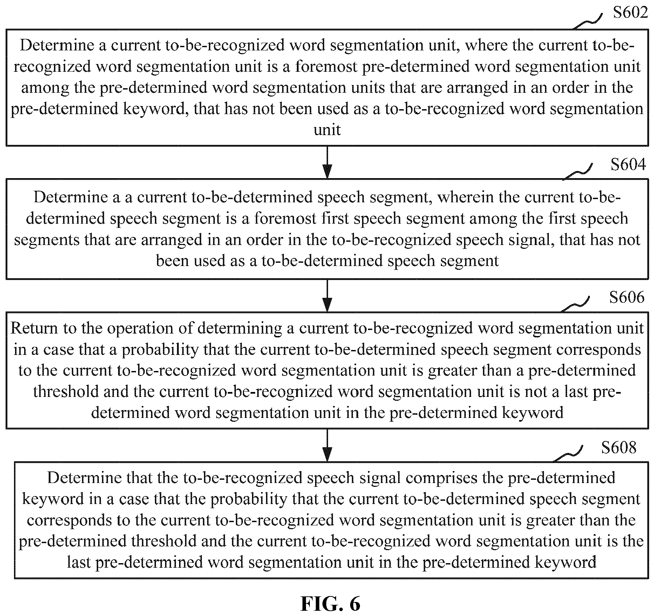

As shown in FIG. 6, in an embodiment, the determining, based on the first probability and the pre-determined decision logic, that the to-be-recognized speech signal includes the pre-determined keyword may include the following steps S602 to S608.

In step S602, a current to-be-recognized word segmentation unit is determined.

The current to-be-recognized word segmentation unit is a foremost pre-determined word segmentation unit among the pre-determined word segmentation units that are arranged in an order in the pre-determined keyword, that has not been used as a to-be-recognized word segmentation unit.

An example in which the pre-determined keyword is "xiao lan jing ling" and the pre-determined word segmentation units are respectively "xiao", "lan", "jing", and "ling" is used. In one recognition process, when a current to-be-recognized word segmentation unit is determined for the first time, each of "xiao", "lan", "jing", and "ling" is a pre-determined word segmentation unit that has not been used as a to-be-recognized word segmentation unit. In this case, the foremost "xiao" is determined as the current to-be-recognized word segmentation unit. When a current to-be-recognized word segmentation unit is determined for the second time, each of "lan", "jing", and "ling" is a pre-determined word segmentation unit that has not been used as a to-be-recognized word segmentation unit, and the foremost "lan" is determined as the current to-be-recognized word segmentation unit. The rest is deduced by analogy.

In step S604, a current to-be-determined speech segment is determined, where the current to-be-determined speech segment is a foremost first speech segment among the first speech segments that are arranged in an order in the to-be-recognized speech signal, that has not been used as a to-be-determined speech segment.

If the to-be-recognized speech signal includes N unit frames, there are N first speech segments correspondingly. Based on an order in which the unit frames corresponding to the first speech segments appear in the to-be-recognized speech signal, the first speech segments are respectively the 1st first speech segment, the 2nd first speech segment, ..., and the N^{th} first speech segment from front to back. In one recognition process, when a current to-be-determined speech segment is determined for the first time, none of the N first speech segments has been used as a to-be-determined speech segment, the 1st first speech segment is determined as the current to-be- recognized speech segment. When a current to-be-determined speech segment is determined for the second time, none of the 2nd first speech segment, the 3rd first speech segment, ..., and the N^{th} first speech segment has been used as a to-be-determined speech segment, the foremost 2nd first speech segment is determined as the current to-be-determined speech segment. The rest is deduced by analogy.

In step S606, the procedure returns to the operation of determining a current to-be-recognized word segmentation unit in a case that a probability that the current to-be-determined speech segment corresponds to the current to-be-recognized word segmentation unit is greater than a pre-determined threshold and the current to-be-recognized word segmentation unit is not a last pre-determined word segmentation unit in the pre-determined keyword.

In step S608, it is determined that the to-be-recognized speech signal includes the pre-determined keyword in a case that a probability that the current to-be-determined speech segment corresponds to the current to-be-recognized word segmentation unit is greater than the pre-determined threshold and the current to-be-recognized word segmentation unit is the last pre-determined word segmentation unit in the pre-determined keyword.

In this embodiment, after the current to-be-recognized word segmentation unit and the current to-be-determined speech segment are determined, it is determined whether the probability that the current to-be-determined speech segment corresponds to the current to-be-recognized word segmentation unit is greater than the pre-determined threshold.

If the probability is greater than the pre-determined threshold, it indicates that the current to-be-determined speech segment includes the current to-be-recognized word segmentation unit. In this case, it is further determined whether the current to-be-recognized word segmentation unit is the last pre-determined word segmentation unit in the pre-determined keyword. If the current to-be-recognized word segmentation unit is not the last pre-determined word segmentation unit in the pre-determined keyword, it indicates that currently, it is only detected that the to-be-recognized speech signal includes the current to-be-recognized word segmentation unit, and it needs to be further detected whether the to-be-recognized speech signal includes other pre-determined word segmentation units. Therefore, the procedure returns to the operation of determining a current to-be-recognized word segmentation unit. If the current to-be-recognized word segmentation unit is the last pre-determined word segmentation unit in the pre-determined keyword, it indicates that the to-be-recognized speech signal includes all the pre-determined word segmentation units of the pre-determined keyword. Therefore, it may be determined that the to-be-recognized speech signal includes the pre-determined keyword.

If the probability is less than or equal to the pre-determined threshold, it indicates that the current to-be-determined speech segment does not includes the current to-be-recognized word segmentation unit. In an embodiment, when it is determined that the probability is less than or equal to the pre-determined threshold, the process returns to the operation of determining a current to-be-determined speech segment, to determine a next first speech segment as the current to-be-determined speech segment, and determine whether the next first speech segment includes the current to-be-recognized word segmentation unit.

In this embodiment, if the current to-be-determined speech segment is a first speech segment corresponding to the last unit frame in the to-be-recognized speech signal, and it is detected that the first speech segment does not includes the last pre-determined word segmentation unit in the pre-determined keyword, it may be determined that the to-be-recognized speech signal does not include the pre-determined keyword. A recognition result representing that the to-be-recognized speech signal does not include the pre-determined keyword is outputted, and the recognition process ends.

As described above, the system may achieve a relatively low false negative rate by using the pre-determined decision logic. Correspondingly, in this embodiment, the system may also achieve a relatively low false negative rate by adjusting the pre-determined threshold.

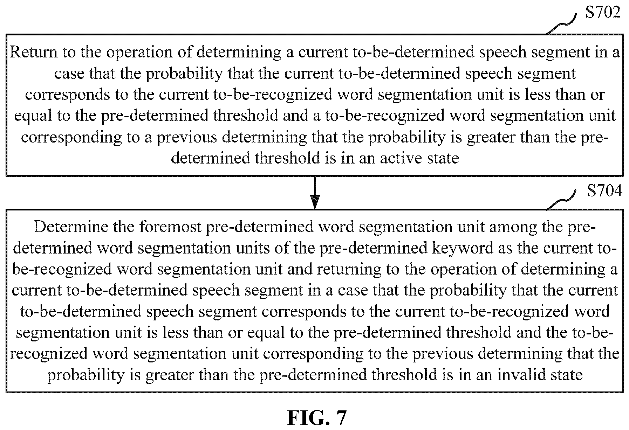

In an embodiment, based on the embodiment shown in FIG. 6, as shown in FIG. 7, the speech keyword recognition method may further include the following steps S702 to S704.

In step S702, the process returns to the operation of determining a current to-be-determined speech segment (step S604) in a case that the probability that the current to-be-determined speech segment corresponds to the current to-be-recognized word segmentation unit is less than or equal to the pre-determined threshold and a to-be-recognized word segmentation unit corresponding to the previous determining that the probability is greater than the pre-determined threshold is in an active state.

In step S704, the foremost pre-determined word segmentation unit among the pre-determined word segmentation units of the pre-determined keyword is determined as a current to-be-recognized word segmentation unit and the process returns to the operation of determining a current to-be-determined speech segment (step S604) in a case that the probability that the current to-be-determined speech segment corresponds to the current to-be-recognized word segmentation unit is less than or equal to the pre-determined threshold and a to-be-recognized word segmentation unit corresponding to the previous determining that the probability is greater than the pre-determined threshold is in an invalid state.

For the to-be-recognized speech signal, there may be the following case: the to-be-recognized speech signal includes the pre-determined word segmentation units of the pre-determined keyword, and an order in which the pre-determined word segmentation units appear in the to-be-recognized speech signal is consistent with an order in which the pre-determined word segmentation units appear in the pre-determined keyword. However, in the to-be-recognized speech signal, the pre-determined word segmentation units cannot be consecutively connected to form the pre-determined keyword, but are separated by other padding information. For example, the pre-determined keyword is "xiao lan jing ling", and the pre-determined word segmentation units are respectively "xiao", "lan", "jing", and "ling". However, "xiao peng you ai lan jing ling" rather than "xiao lan jing ling" appears in the to-be-recognized speech signal, that is, "xiao lan jing ling" is separated by "peng you ai". In this case, the to-be-recognized speech signal does not include the pre-determined keyword. However, it may still be recognized that the to-be-recognized speech signal includes the pre-determined keyword, that is, misrecognition occurs.

Based on this, in this embodiment, when it is determined that the probability that the current to-be-determined speech segment corresponds to the current to-be-recognized word segmentation unit is less than or equal to the pre-determined threshold, it is further determined whether a to-be-recognized word segmentation corresponding to the previous determining that the probability is greater than the pre-determined threshold is in an active state. If the o-be-recognized word segmentation unit is in the active state, the process returns to the operation of determining a current to-be-determined speech segment. If the o-be-recognized word segmentation unit is not in the active state, the foremost pre-determined word segmentation unit among the pre-determined word segmentation units of the pre-determined keyword is determined as a current to-be-recognized word segmentation unit, and the process returns to the operation of determining a current to-be-determined speech segment. For example, if the pre-determined keyword is "xiao lan jing ling", and the pre-determined word segmentation units are respectively "xiao", "lan", "jing", and "ling", the foremost "xiao" among all the pre-determined word segmentation units is determined as a current to-be-recognized word segmentation unit, and the process returns to the operation of determining a current to-be-determined speech segment.

In an embodiment, whether a to-be-recognized word segmentation unit corresponding to the previous determining that the probability is greater than the pre-determined threshold is in an active state may be determined by using a count value. When it is determined that the probability that the current to-be-determined speech segment corresponds to the current to-be-recognized word segmentation unit is greater than the pre-determined threshold, and the current to-be-recognized word segmentation unit is not the last pre-determined word segmentation unit in the pre-determined keyword, the current count value is set to a pre-determined initial triggering value (which may be a positive number that is set based on service experiences, such as 30), and the process returns to the operation of determining a current to-be-recognized word segmentation unit.

In addition, when it is determined that the probability that the current to-be-determined speech segment corresponds to the current to-be-recognized word segmentation unit is less than or equal to the pre-determined threshold, the current count value is updated by subtracting a pre-determined adjusting value (for example, subtracting 1) from the current count value, and whether the current count value is greater than a pre-determined standard value (such as 0) is determined. If the current count value is greater than the pre-determined standard value, it indicates that the to-be-recognized word segmentation unit corresponding to the previous determining that the probability is greater than the pre-determined threshold is in the active state, and the process may return to the operation of determining a current to-be-determined speech segment. If the current count value is less than or equal to the pre-determined standard value, it indicates that the to-be-recognized word segmentation unit corresponding to the previous determining that the probability is greater than the pre-determined threshold is in the invalid state. Therefore, the foremost pre-determined word segmentation unit among the pre-determined word segmentation units of the pre-determined keyword may be determined as the current to-be-recognized word segmentation unit, and the process returns to the operation of determining a current to-be-determined speech segment.

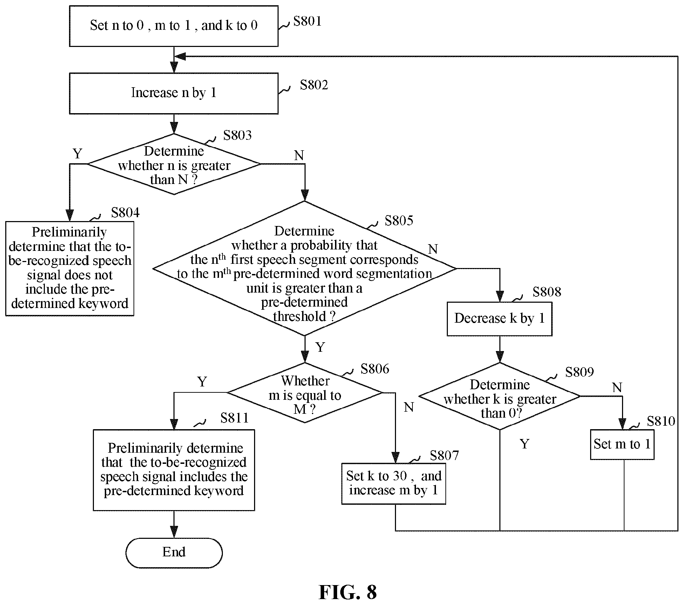

In an embodiment, if N first speech segments are determined based on the to-be-recognized speech signal, and an index value of a first speech segment is set to n, the n^{th} first speech segment ranks n according to an order from front to back in the to-be-recognized speech signal, where n is less than or equal to N. In addition, if the pre-determined keyword includes M pre-determined word segmentation units, and an index value of a pre-determined word segmentation unit is set to m, the m^{th} pre-determined word segmentation unit ranks m according to an order from front to back in the pre-determined keyword, where m is less than or equal to M. Moreover, the count value is k, and it is assumed that the initial triggering value of the count value is 30. As shown in FIG. 8, in this embodiment, an operation of preliminarily determining, based on the pre-determined decision logic, whether the to-be-recognized speech signal includes the pre-determined keyword may include the following steps S801 to S811.

In step S801, n is set to 0, m is set to 1, and k is set to 0.

In step S802, n is increased by 1.

In step S803, it is determined whether n is greater than N. If n is greater than N, step S804 is performed. If n is not greater than N, step S805 is performed.

In step S804, it is preliminarily determined that the to-be-recognized speech signal does not include the pre-determined keyword, and the process is ended.

In step S805, it is determine whether a probability that the n^{th} first speech segment corresponds to the m^{th} pre-determined word segmentation unit is greater than a pre-determined threshold. If the probability is greater than the pre-determined threshold, step S806 is performed. If the probability is not greater than the pre-determined threshold, step S808 is performed.

In step S806, it is determine whether m is equal to M. If m is not equal to M, step S807 is performed. If m is equal to M, step S811 is performed.

In step S807, k is set to 30, m is increased by 1, and the process returns to step S802.

In step S808, k is decreased by 1.

In step S809, it is determined whether k is greater than 0. If k is greater than 0, the process returns to step S802. If k is not greater than 0, step S810 is performed.

In step S810, m is set to 1, and the process returns to step S802.

In step S811, it is preliminarily determined that the to-be-recognized speech signal includes the pre-determined keyword, and the process is ended.

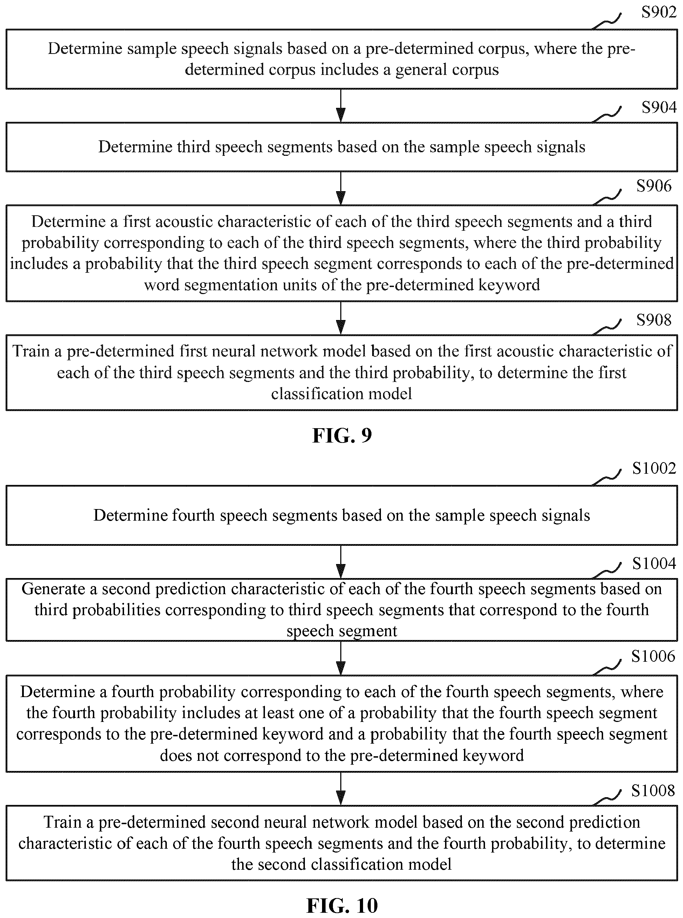

In an embodiment, as shown in FIG. 9, the determining the first classification model may include the following steps S902 to S908.

In step S902, sample speech signals are determined based on a pre-determined corpus, where the pre-determined corpus includes a general corpus.

In step S904, third speech segments are determined based on the sample speech signals.

In step S906, a first acoustic characteristic of each of the third speech segments and a third probability corresponding to each of the third speech segments are determined, where the third probability includes a probability that the third speech segment corresponds to each of the pre-determined word segmentation units of the pre-determined keyword.

In step S908, a pre-determined first neural network model is trained based on the first acoustic characteristic of each of the third speech segments and the third probability, to determine the first classification model.

It may be understood that, before classification processing is performed by using the first classification model, the pre-determined neural network model needs to be trained based on sample data, to obtain the first classification model.

In the conventional solution, generally, the sample speech signals can only be determined based on a specialized corpus. The specialized corpus refers to a corpus that is specially established for a pre-determined keyword. The specialized corpus includes speech signals of a corresponding pre-determined keyword that are collected under various different acoustic conditions. It may be understood that, for different pre-determined keywords, different specialized corpuses need to be established, and establishing a specialized corpus is a quite time-consuming and labor-consuming job, which limits flexible development and fast launch of a product.

Based on this, in this embodiment, the sample speech signals may be determined based on the general corpus, so that the foregoing limitations may be effectively reduced. In addition, the general corpus has advantages of an acoustic condition with wider coverage, a larger data scale, and more guaranteed speech signal quality. Therefore, recognition of the pre-determined keyword can be implemented efficiently and robustly.

It may be understood that, in the general corpus, the speech signals each have a corresponding annotation, and the annotation is used for representing content information of each corresponding speech signal. In this embodiment, after the sample speech signals are determined, similar to a processing procedure of the to-be-recognized speech signal, third speech segments are obtained by performing framing and splicing processing, and then the first acoustic characteristic of each of the third speech segments is determined based on acoustic characteristics of sample unit frames included in the third speech segments. However, different from the processing of the to-be-recognized speech signal, when the sample speech signals are processed, frame alignment processing further needs to be performed. Through the frame alignment processing, it is determined that an annotation from which sample unit frame to which sample unit frame in the sample speech signals corresponds to a corresponding pre-determined word segmentation unit. In addition, the first acoustic characteristic is similar to the foregoing acoustic characteristic of the first speech segment. Details are not described herein.

In an embodiment, the probability that the third speech segment correspond to each of the pre-determined word segmentation units of the pre-determined keyword may be determined based on annotations in the general corpus. In another embodiment, the probability that the third speech segment correspond to each of the pre-determined word segmentation units of the pre-determined keyword, and a probability that the third speech segment correspond to second padding information may also be determined based on annotations in the general corpus. The second padding information is similar to the foregoing first padding information. Details are not described herein.

Then, the pre-determined first neural network model is trained based on the first acoustic characteristic of each of the third speech segments and the third probability, that is, model parameters related to the first neural network model are determined, thereby determining the first classification model.

In an embodiment, based on the embodiment shown in FIG. 9, as shown in FIG. 10, training the second classification model may include the following steps S 1002 to S 1008.

In step S 1002, fourth speech segments are determined based on the sample speech signals.

In step S1004, a second prediction characteristic of each of the fourth speech segment is generated based on third probabilities corresponding to third speech segments that correspond to the fourth speech segment.

In step S1006, a fourth probability corresponding to each of the fourth speech segments is determined, where the fourth probability includes at least one of a probability that the fourth speech segment corresponds to the pre-determined keyword and a probability that the fourth speech segment does not correspond to the pre-determined keyword.

In step S1008, a pre-determined second neural network model is trained based on the second prediction characteristic of each of the fourth speech segments and the fourth probability, to determine the second classification model.

Similar to the first classification model, before classification processing is performed by using the second classification model, the pre-determined second neural network model needs to be trained based on sample data, to obtain the second classification model.

In this embodiment, the determining fourth speech segments based on the sample speech signals is similar to a processing procedure of determining second speech segments based on the to-be-recognized speech signal. Details are not described herein. In addition, the fourth probability is similar to the above second probability, except that the fourth probability corresponds to a different object from the second probability (the second probability correspond to the second speech segment, and the fourth probability correspond to the fourth speech segment). Details are not described herein either.

Training may be performed aiming at optimizing a cross entropy, by using a distributed asynchronous gradient descent method, to determine model parameters related to the first neural network model and the second neural network model.

In addition, when the second speech segments, the third speech segments, and the fourth speech segments are obtained through splicing processing, if a total number of unit frames preceding or following a unit frame is less than a corresponding preset number of frames, the corresponding preset number of frames may be made up by referring to the foregoing duplication processing manner described in the description of determining the first speech segments through splicing processing. Details are not described herein.

In an embodiment, before the generating a first prediction characteristic of each of the second speech segments, the method may further include a step: determining a second acoustic characteristic of each of the second speech segments. The first prediction characteristic of the second speech segment is generated based on the second acoustic characteristic of the second speech segment, and first probabilities corresponding to first speech segments that correspond to the second speech segment.

In this embodiment, in addition to the first probabilities corresponding to first speech segments that correspond to the second speech segment, the first prediction characteristic of the second speech segment may further include the second acoustic characteristic of the second speech segment. The first prediction characteristic includes more effective characteristic information, so that recognition accuracy may be improved. In addition, the second acoustic characteristic is similar to the foregoing acoustic characteristic of the first speech segments. Details are not described herein.

In an embodiment, a method for determining the pre-determined word segmentation units of the pre-determined keyword may include the following operation: performing word segmentation processing on the pre-determined keyword according to a pre-determined word segmentation manner, to determine the pre-determined word segmentation units of the pre-determined keyword, where each of the pre-determined word segmentation units includes at least one of a syllable, a phoneme, and a word.

It is to be noted that, in each of the foregoing embodiments, description is made by using an example in which the pre-determined word segmentation unit is a syllable. However, in the present disclosure, a word segmentation unit may be set according to an actual requirement (for example, recognition accuracy and system performance). For example, the phoneme may be further used as the pre-determined word segmentation unit. Alternatively, the word is used as the pre-determined word segmentation unit.

In an embodiment, the first classification model includes sub-classification models cascaded to each other, and the number of levels of the sub-classification models is greater than or equal to 2.

Therefore, the operation of inputting the acoustic characteristic of the first speech segment into the first classification model that is trained in advance, to determine a first probability that the first speech segment corresponds to each of the pre-determined word segmentation units of the pre-determined keyword may include: inputting input information corresponding to each level of sub-classification model into the level of sub-classification model, to determine a fifth probability outputted by the level of sub-classification model.

Input information of the first level of sub-classification model includes an acoustic characteristic of each of the first speech segments corresponding to the first level of sub-classification model. Input information of each level of sub-classification model other than the first level of sub-classification model is generated based on a fifth probability outputted by a previous level of sub-classification model.

In addition, for any level of sub-classification model, the fifth probability outputted by the level of sub-classification model includes a probability that a first speech segment corresponding to the level of sub-classification model corresponds to each of pre-determined word segmentation units of the pre-determined keyword corresponding to the level of sub-classification models. In addition, the fifth probability outputted by the last level of sub-classification model in the first classification model is the first probability.

The levels of sub-classification models correspond to respective first speech signals and pre-determined word segmentation units, and the first speech signals and the pre-determined word segmentation units that correspond to the levels of sub-classification models are different from each other. In addition, the number of levels of sub-classification models included in the first classification model may be set based on an actual requirement (for example, a requirement on system complexity and system performance).

Using an example in which the pre-determined keyword is "xiao lan jing ling" and the pre-determined word segmenting unit is a syllables, by performing word segmentation processing on the pre-determined keyword, the following three groups of pre-determined word segmentation units may be determined. Pre-determined word segmentation units included in the first group are respectively "xiao", "lan", "jing", and "ling". Pre-determined word segmentation units included in the second group are respectively "xiao lan", "lan jing", and "jing ling". Pre-determined word segmentation units included in the third group are respectively "xiao lan jing", and "lanjing ling".

In this case, the number of levels of sub-classification models included in the first classification model may be 3. Correspondingly, the pre-determined word segmentation units corresponding to the first level of sub-classification model are the pre-determined word segmentation units included in the first group, the pre-determined word segmentation units corresponding to the second level of sub-classification model are the pre-determined word segmentation units included in the second group, and the pre-determined word segmentation units corresponding to the third level of sub-classification model are the pre-determined word segmentation units included in the third group.

In addition, for convenience of description, first speech segments respectively corresponding to the first level, the second level, and third level of sub-classification models may be respectively referred to as a first level of first speech segment, a second level of first speech segment, and a third level of first speech segment below.

Based on this, in this embodiment, an acoustic characteristic of the first level of first speech segment are first inputted into the first level of sub-classification model, classification is performed based on the acoustic characteristic of the first level of first speech segment by using the first level of sub-classification model, and a probability that the first level of first speech segment corresponds to each of "xiao", "lan", "jing", and "ling" is outputted.

Then, a third prediction characteristic of the second level of first speech segment is generated based on the probability outputted by the first level of sub-classification model. The third prediction characteristic is then inputted into the second level of sub-classification model, classification is performed based on the third prediction characteristic by using the second level of sub-classification model, and a probability that the secondary first speech segment corresponds to each of "xiao lan", "lan jing", and "jing ling" are outputted.

Further, a fourth prediction characteristic of the third level of first speech segment is generated based on the probability outputted by the second level of sub-classification model. The fourth prediction characteristic is then inputted into the third level of sub-classification model, classification is performed based on the fourth prediction characteristic by using the third level of sub-classification model, and a probability that the third level of first speech segment corresponds to each of "xiao lan jing" and "lan jing ling" are outputted. The probability outputted by the third level of sub-classification model is the first probability outputted by the first classification model. Then, the first prediction characteristic of each of the second speech segments are generated based on first probabilities of first speech segments corresponding to the second speech segment. Then, the first prediction characteristic is inputted into the second classification model, and corresponding subsequent steps are performed.

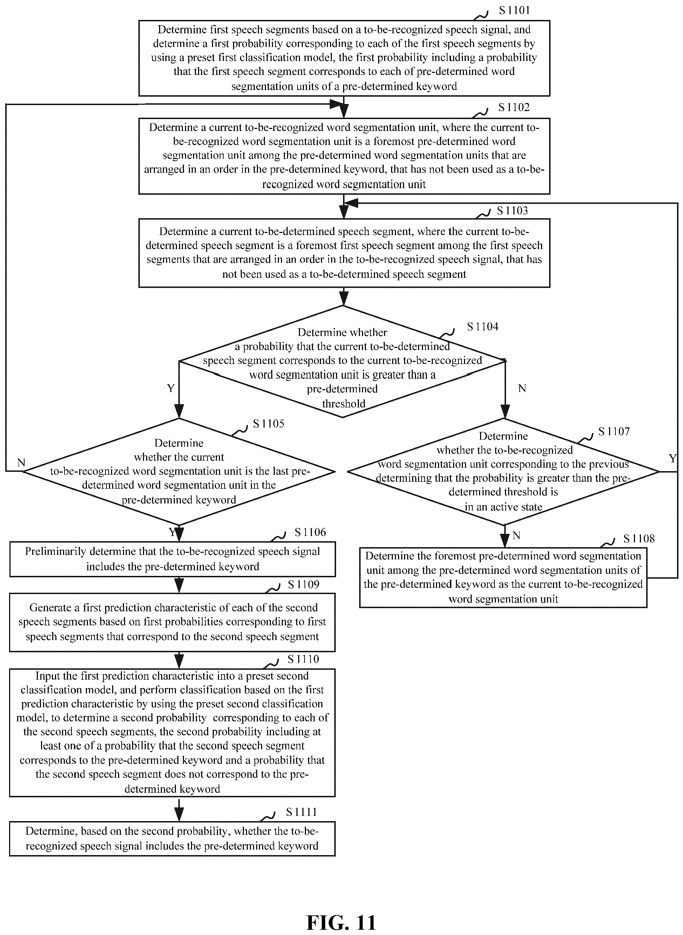

In an embodiment, as shown in FIG. 11, the speech keyword recognition method may include the following steps S1101 to S1111.

In step S1101, first speech segments are determined based on a to-be-recognized speech signal, and a first probability corresponding to each of the first speech segments is determined by using a preset first classification model, the first probability including a probability that the first speech segment corresponds to each of pre-determined word segmentation units of a pre-determined keyword.

In step S1102, a current to-be-recognized word segmentation unit is determined, where the current to-be-recognized word segmentation unit is a foremost pre-determined word segmentation unit among the pre-determined word segmentation units that are arranged in an order in the pre-determined keyword, that has not been used as a to-be-recognized word segmentation unit.

In step S1103, a current to-be-determined speech segment is determined, where the current to-be-determined speech segment is a foremost first speech segment among the first speech segments that are arranged in an order in the to-be-recognized speech signal, that has not been used as a to-be-determined speech segment.

In S1104, it is determined whether a probability that the current to-be-determined speech segment corresponds to the current to-be-recognized word segmentation unit is greater than a pre-determined threshold. If the probability is greater than the pre-determined threshold, step S 1105 is performed, and if the probability is not greater than the pre-determined threshold, step S1107 is performed.

In step S1105, it is determined whether the current to-be-recognized word segmentation unit is the last pre-determined word segmentation unit in the pre-determined keyword. If the current to-be-recognized word segmentation unit is the last pre-determined word segmentation unit, the process returns to step S1102. If the current to-be-recognized word segmentation unit is not the last pre-determined word segmentation unit, step S1106 is performed.

In step S1106, it is preliminarily determined that the to-be-recognized speech signal includes the pre-determined keyword, and step S1109 is performed.

In step S1107, it is determined whether the to-be-recognized word segmentation unit corresponding to the previous determining that the probability is greater than the pre-determined threshold is in an active state. If the to-be-recognized word segmentation unit is in an active state, the process returns to step S1103. If the to-be-recognized word segmentation unit is not in an active state, step S1108 is performed.

In step S1108, the foremost pre-determined word segmentation unit among the pre-determined word segmentation units of the pre-determined keyword is determined as the current to-be-recognized word segmentation unit, and the process returns to S1103.

In step S1109, a first prediction characteristic of each of the second speech segments is generated based on first probabilities corresponding to first speech segments that correspond to the second speech segment.

In step S1110, the first prediction characteristic is inputted into a preset second classification model, and classification is performed based on the first prediction characteristic by using the preset second classification model, to determine a second probability corresponding to each of the second speech segments, the second probability including at least one of a probability that the second speech segment corresponds to the pre-determined keyword and a probability that the second speech segment does not correspond to the pre-determined keyword.

In step S1111, it is determined, based on the second probability, whether the to-be-recognized speech signal includes the pre-determined keyword.

Technical features of the steps in this embodiment may be the same as technical features of the corresponding steps in the foregoing embodiments. Details are not described herein.

It is to be understood that, under a proper condition, although the steps in the flowcharts related to the foregoing embodiments are displayed sequentially according to the indications of the arrows, these steps are not necessarily performed sequentially according to the sequence indicated by the arrows. Unless explicitly specified in the present disclosure, performing of the steps is not strictly limited, and the steps may be performed in other sequences, provided that the resulting subject-matter still falls under the scope of the appended claims. This condition also applies to the following statement that, besides, at least some steps may include multiple sub-steps or multiple stages, the sub-steps or stages are not necessarily performed at a same moment and may be performed at different moments, the sub-steps or stages are not necessarily sequentially performed, and the sub-steps or stages and at least some of other steps or sub-steps or stages of other steps may be performed in turn or alternately.

The speech keyword recognition method provided in the embodiments of the present disclosure may be applied to scenarios such as electronic device wakeup, dialog interaction interface initialization, audio indexing and retrieval, and speech password authentication. In addition, the recognition method may be used as an important front-end processing module in an automatic speech recognition system, which can greatly save resource occupation and consumption of the automatic speech recognition system, and improve user experience. More specifically, the method may be applied to a smart sound box, speech recognition of an artificial intelligence laboratory (AI Lab), an intelligent speech assistant, and the like.

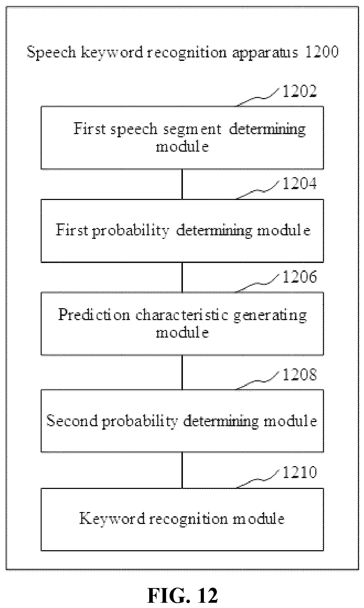

In an embodiment, as shown in FIG. 12, a speech keyword recognition apparatus 1200 is provided, and may include the following modules 1202 to 1210.

A first speech segment determining module 1202 is configured to determine first speech segments based on a to-be-recognized speech signal.

A first probability determining module 1204 is configured to determine a first probability corresponding to each of the first speech segments by using a preset first classification model, the first probability of each of the first speech segments including a probability that the first speech segment corresponds to each of pre-determined word segmentation units of a pre-determined keyword.

A prediction characteristic generating module 1206 is configured to determine second speech segments based on the to-be-recognized speech signal, and generate a first prediction characteristic of each of the second speech segments based on first probabilities corresponding to first speech segments that correspond to the second speech segment.

A second probability determining module 1208 is configured to perform classification based on the first prediction characteristic by using a preset second classification model, to determine a second probability corresponding to each of the second speech segments, the second probability including at least one of a probability that the second speech segment corresponds to the pre-determined keyword and a probability that the second speech segment does not correspond to the pre-determined keyword.

A keyword recognition module 1210 is configured to determine, based on the second probability, whether the to-be-recognized speech signal includes the pre-determined keyword.

In the foregoing speech keyword recognition apparatus, after the first probability corresponding to each of the first speech segments of the to-be-recognized speech signal is determined based on the first classification model, whether the to-be-recognized speech signal includes the pre-determined keyword does not need to be finally determined based on the manually set decision logic. The second speech segments are determined based on the to-be-recognized speech signal, and the prediction characteristic of each of the second speech segment is generated based on the first probabilities respectively corresponding to the first speech segments that correspond to the second speech segment. The prediction characteristic is inputted into the second classification model, to determine at least one of the probability that the second speech segment corresponds to the pre-determined keyword and the probability that the second speech segment does not correspond to the pre-determined keyword, and then whether the to-be-recognized speech signal includes the pre-determined keyword is finally determined based on the probability outputted by the second classification model. Therefore, a problem that the conventional method is sensitive to a manually set decision logic can be effectively overcome, thereby improving universality.

In an embodiment, the apparatus 1200 may further include an initial recognition module. The initial recognition module is configured to invoke the prediction characteristic generating module in a case of determining, based on the first probability and a pre-determined decision logic, that the to-be-recognized speech signal includes the pre-determined keyword.

In an embodiment, the initial recognition module may further include a current word segmentation determining unit, a current segment recognition unit, a first returning unit, and an initial determining unit.

The current word segmentation determining unit is configured to determine a current to-be-recognized word segmentation unit, where the current to-be-recognized word segmentation unit is a foremost pre-determined word segmentation unit among the pre-determined word segmentation units that are arranged in an order in the pre-determined keyword, that has not been used as a to-be-recognized word segmentation unit.

The current segment recognition unit is configured to determine a current to-be-determined speech segment, where the current to-be-determined speech segment is a foremost first speech segment among the first speech segments that are arranged in an order in the to-be-recognized speech signal, that has not been used as a to-be-determined speech segment.

The first invoking unit is configured to invoke the current word segmentation determining unit in a case that a probability that the current to-be-determined speech segment corresponds to the current to-be-recognized word segmentation unit is greater than a pre-determined threshold and the current to-be-recognized word segmentation unit is not a last pre-determined word segmentation unit in the pre-determined keyword.

The preliminary determining unit is configured to determine that the to-be-recognized speech signal includes the pre-determined keyword in a case that the probability that the current to-be-determined speech segment corresponds to the current to-be-recognized word segmentation unit is greater than the pre-determined threshold and the current to-be-recognized word segmentation unit is the last pre-determined word segmentation unit in the pre-determined keyword.

In an embodiment, the initial recognition module may further include a second invoking unit and a word segmentation resetting unit.

The second invoking unit is configured to invoke the current segment recognition unit in a case that the probability that the current to-be-determined speech segment corresponds to the current to-be-recognized word segmentation unit is less than or equal to the pre-determined threshold and a to-be-recognized word segmentation unit corresponding to a previous determining that the probability is greater than the pre-determined threshold is in an active state.

The word segmentation resetting unit is configured to determine the foremost pre-determined word segmentation unit among the pre-determined word segmentation units of the pre-determined keyword as the current to-be-recognized word segmentation unit and invoke the current segment recognition unit in a case that the probability that the current to-be-determined speech segment corresponds to the current to-be-recognized word segmentation unit is less than or equal to the pre-determined threshold and the to-be-recognized word segmentation unit corresponding to the previous determining that the probability is greater than the pre-determined threshold is in an invalid state.

In an embodiment, the apparatus 1200 may further include a sample data determining module, a first segment determining module, a first sample characteristic determining module, and a first model training module.

The sample data determining module is configured to determine sample speech signals based on a pre-determined corpus, where the pre-determined corpus includes a general corpus.

The first segment determining module is configured to determine third speech segments based on the sample speech signals.

The first sample characteristic determining module is configured to determine a first acoustic characteristic of each of the third speech segments and a third probability corresponding to each of the third speech segments, where the third probability corresponding to each of the third speech segments includes a probability that the third speech segment corresponds to each of the pre-determined word segmentation units of the pre-determined keyword.

The first model training module is configured to train a pre-determined first neural network model based on the first acoustic characteristic of each of the third speech segments and the third probability, to determine the first classification model.

In an embodiment, the apparatus 1200 may further include a second segment determining module, a second sample characteristic determining module, a sample probability determining module, and a second model training module.

The second segment determining module is configured to determine fourth speech segments based on the sample speech signals.

The second sample characteristic determining module is configured to generate a second prediction characteristic of each of the fourth speech segments based on third probabilities corresponding to third speech segments that correspond to the fourth speech segment.

The sample probability determining module is configured to determine a fourth probability corresponding to each of the fourth speech segments, where the fourth probability includes at least one of a probability that the fourth speech segment corresponds to the pre-determined keyword and a probability that the fourth speech segment does not correspond to the pre-determined keyword.

The second model training module is configured to train a pre-determined second neural network model based on the second prediction characteristic of each of the fourth speech segments and the fourth probability, to determine the second classification model.

In an embodiment, the apparatus 1200 further includes an acoustic characteristic determining module, configured to determine a second acoustic characteristic of each of the second speech segments. In this case, the second sample characteristic determining module is configured to generate the first prediction characteristic of each of the second speech segments based on the second acoustic characteristic of the second speech segment and the first probabilities corresponding to the first speech segments that correspond to the second speech segment.

In an embodiment, the apparatus 1200 may further include a word segmentation processing module. The word segmentation processing module is configured to perform word segmentation processing on the pre-determined keyword based on a pre-determined word segmenting unit, to determine the pre-determined word segmentation units of the pre-determined keyword, where the pre-determined word segmenting unit includes at least one of a syllable, a phoneme, and a word.

In an embodiment, the first classification model includes sub-classification models cascaded to each other, and the number of levels of the sub-classification models is greater than or equal to 2.

In an embodiment, a computer device is provided, including a memory and a processor, the memory storing a computer program, the computer program, when executed by the processor, causing the processor to perform operations of the speech keyword recognition method according to any embodiment of the present disclosure.

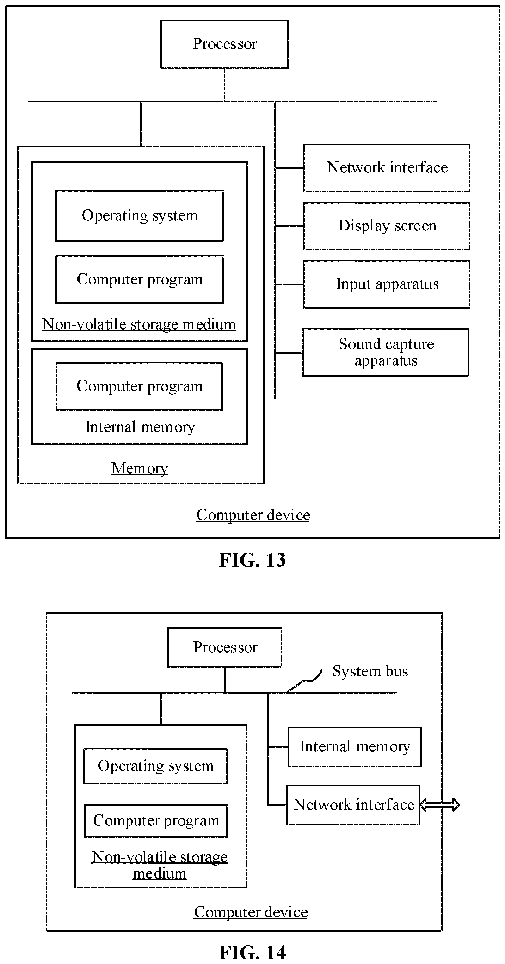

In an embodiment, the computer device may be a user terminal 110 in FIG. 1. An internal structure of the computer device may be shown in FIG. 13. The computer device includes a processor, a memory, a network interface, a display screen, an input apparatus, and a sound capture apparatus connected through a system bus. The processor is configured to provide computation and control abilities. The memory includes a non-volatile storage medium and an internal memory. The non-volatile storage medium of the computer device stores an operating system and a computer program. The computer program, when executed by the processor, may cause the processor to implement the speech keyword recognition method provided in the embodiments of the present disclosure. The internal memory provides an environment for running the operating system and the computer program in the non-volatile storage medium. The network interface is configured to connect to and communicate with an external terminal by using a network. The display screen may be a liquid crystal display screen or an electronic ink display screen. The input apparatus may be a touch layer covering the display screen, or may be a button, a trackball, or a touchpad disposed on a housing of the computer device, or may be an external keyboard, touchpad, or mouse.

In another embodiment, the computer device may be a server 120 shown in FIG. 1. An internal structure of the computer device may be shown in FIG. 14. The computer device includes a processor, a memory, and a network interface that are connected by using a system bus. The processor is configured to provide computation and control abilities. The memory includes a non-volatile storage medium and an internal memory. The non-volatile storage medium stores an operating system and a computer program, and the internal memory provides an environment for running the operating system and the computer program in the non-volatile storage medium. The computer program is executed by the processor, to implement the speech keyword recognition method provided in any embodiment of the present disclosure. The network interface is configured to connect to and communicate with an external terminal by using a network.

A person skilled in the art may understand that the structure shown in FIG. 13 and FIG. 14 is only a block diagram of a partial structure related to the solution of the present disclosure, and does not limit the computer device to which the solution of the present disclosure is applied. Specifically, the computer device may include more or less components than those shown in FIG. 13, or some components may be combined, or different component deployment may be used.

In an embodiment, the speech keyword recognition apparatus provided in the present disclosure may be implemented in a form of a computer program. The computer program may be run on the computer device shown in FIG. 13 or FIG. 14. The memory of the computer device may store program modules forming the apparatus, for example, the first probability determining module 1202, the prediction characteristic generating module 1204, the second probability determining module 1206, and the keyword recognition module 1208 that are shown in FIG. 12. The computer program formed by the program modules causes the processor to perform operations of the speech keyword recognition method according to any embodiment of the present disclosure.

For example, in the computer device shown in FIG. 13 and FIG. 14, step S202 may be performed by using the first probability determining module 1202 in the speech keyword recognition apparatus 1200 shown in FIG. 12, step S204 may be performed by using the prediction characteristic generating module 1204, and the like.

A person of ordinary skill in the art may understand that all or some of the processes of the methods in the foregoing embodiments may be implemented by a computer program instructing relevant hardware. The program may be stored in a non-volatile computer-readable storage medium. When the program runs, the processes of the foregoing methods in the embodiments are performed. Any reference to a memory, a storage, a database, or other mediums used in the embodiments provided in the present disclosure can include a non-volatile and/or volatile memory. The non-volatile memory may include a read-only memory (ROM), a programmable ROM (PROM), an electrically programmable ROM (EPROM), an electrically erasable programmable ROM (EEPROM) or a flash memory. The volatile memory may include a random access memory (RAM) or an external high-speed cache memory. As a description instead of a limitation, the RAM may have multiple forms, such as a static RAM (SRAM), a dynamic RAM (DRAM), a synchronous DRAM (SDRAM), a double data rate SDRAM (DDRSDRAM), an enhanced SDRAM (ESDRAM), a Synchlink DRAM (SLDRAM), a rambus direct RAM (RDRAM), a direct rambus dynamic RAM (DRDRAM), and a rambus dynamic RAM (RDRAM).

Therefore, in an embodiment, a computer-readable storage medium is provided, storing a computer program, the computer program, when executed by a processor, causing the processor to perform the operations of the method in any embodiment of the present disclosure.

Technical features of the foregoing embodiments may be randomly combined, provided that the resulting subject-matter still falls under the scope of the appended claims. To make description concise, not all possible combinations of the technical features in the foregoing embodiments are described.

The foregoing embodiments only show several implementations of the present disclosure and are described in detail. A person of ordinary skill in the art may make various changes and improvements without departing from the ideas of the present disclosure. Therefore, the protection scope of the patent of the present disclosure shall be subject to the appended claims.

## Claims

1. A speech keyword recognition method, performed by a user terminal or a server, comprising operations:
determining first speech segments based on a to-be-recognized speech signal;
determining a first probability corresponding to each of the first speech segments by using a preset first classification model, the first probability comprising a probability, for each of pre-determined word segmentation units of a pre-determined keyword, that the first speech segment corresponds to the respective pre-determined word segmentation unit;
determining second speech segments based on the to-be-recognized speech signal, and generating a first prediction characteristic of each of the second speech segments based on first probabilities corresponding to first speech segments that correspond to the second speech segment;
performing classification based on the first prediction characteristic by using a preset second classification model, to determine a second probability corresponding to each of the second speech segments, the second probability comprising at least one of a probability that the second speech segment corresponds to the pre-determined keyword and a probability that the second speech segment does not correspond to the pre-determined keyword; and
determining, based on the second probability, whether the to-be-recognized speech signal comprises the pre-determined keyword.

2. The method according to claim 1, wherein in a case of determining, based on the first probability and a pre-determined decision logic, that the to-be-recognized speech signal comprises the pre-determined keyword, the operation of determining second speech segments based on the to-be-recognized speech signal is performed.

3. The method according to claim 2, wherein the determining, based on the first probability and the pre-determined decision logic, that the to-be-recognized speech signal comprises the pre-determined keyword comprises:
determining a current to-be-recognized word segmentation unit, wherein the current to-be-recognized word segmentation unit is a foremost pre-determined word segmentation unit among the pre-determined word segmentation units that are arranged in an order in the pre-determined keyword, that has not been used as a to-be-recognized word segmentation unit;
determining a current to-be-determined speech segment, wherein the current to-be-determined speech segment is a foremost first speech segment among the first speech segments that are arranged in an order in the to-be-recognized speech signal, that has not been used as a to-be-determined speech segment;
returning to the operation of determining a current to-be-recognized word segmentation unit in a case that a probability that the current to-be-determined speech segment corresponds to the current to-be-recognized word segmentation unit is greater than a pre-determined threshold and the current to-be-recognized word segmentation unit is not a last pre-determined word segmentation unit in the pre-determined keyword; and
determining that the to-be-recognized speech signal comprises the pre-determined keyword in a case that the probability that the current to-be-determined speech segment corresponds to the current to-be-recognized word segmentation unit is greater than the pre-determined threshold and the current to-be-recognized word segmentation unit is the last pre-determined word segmentation unit in the pre-determined keyword.

4. The method according to claim 3, further comprising:
returning to the operation of determining a current to-be-determined speech segment in a case that the probability that the current to-be-determined speech segment corresponds to the current to-be-recognized word segmentation unit is less than or equal to the pre-determined threshold and a to-be-recognized word segmentation unit corresponding to a previous determining that the probability is greater than the pre-determined threshold is in an active state; and
determining the foremost pre-determined word segmentation unit among the pre-determined word segmentation units of the pre-determined keyword as the current to-be-recognized word segmentation unit and returning to the operation of determining a current to-be-determined speech segment in a case that the probability that the current to-be-determined speech segment corresponds to the current to-be-recognized word segmentation unit is less than or equal to the pre-determined threshold and the to-be-recognized word segmentation unit corresponding to the previous determining that the probability is greater than the pre-determined threshold is in an invalid state.

5. The method according to claim 1, wherein determining the first classification model comprises:
determining sample speech signals based on a pre-determined corpus, wherein the pre-determined corpus comprises a general corpus;
determining third speech segments based on the sample speech signals;
determining a first acoustic characteristic of each of the third speech segments and a third probability corresponding to each of the third speech segments, wherein the third probability comprises a probability that the third speech segment corresponds to each of the pre-determined word segmentation units of the pre-determined keyword; and
training a pre-determined first neural network model based on the first acoustic characteristic of each of the third speech segments and the third probability, to determine the first classification model.

6. The method according to claim 5, wherein determining the second classification model comprises:
determining fourth speech segments based on the sample speech signals;
generating a second prediction characteristic of each of the fourth speech segments based on third probabilities corresponding to third speech segments that correspond to the fourth speech segment;
determining a fourth probability corresponding to each of the fourth speech segments, wherein the fourth probability comprises at least one of a probability that the fourth speech segment corresponds to the pre-determined keyword and a probability that the fourth speech segment does not correspond to the pre-determined keyword; and
training a pre-determined second neural network model based on the second prediction characteristic of each of the fourth speech segments and the fourth probability, to determine the second classification model.

7. The method according to claim 1, wherein before the generating a first prediction characteristic of each of the second speech segments based on first probabilities corresponding to first speech segments that correspond to the second speech segment, the method further comprises:
determining a second acoustic characteristic of each of the second speech segments; and
the generating a first prediction characteristic of each of the second speech segments based on first probabilities corresponding to first speech segments that correspond to the second speech segment comprises:
generating the first prediction characteristic of each of the second speech segments based on the second acoustic characteristic of the second speech segment and the first probabilities corresponding to the first speech segments that correspond to the second speech segment.

8. The method according to claim 1, wherein the pre-determined word segmentation units of the pre-determined keyword are determined by:
performing word segmentation processing on the pre-determined keyword according to a pre-determined word segmentation manner, to determine the pre-determined word segmentation units of the pre-determined keyword, wherein the pre-determined word segmentation manner comprises at least one of by syllables, by phonemes, and by words.

9. The method according to any one of claims 1 to 8, wherein the first classification model comprises sub-classification models cascaded to each other, and the number of levels of the sub-classification models is greater than or equal to 2.

10. A computer-readable storage medium, storing a computer program, the computer program, when executed by a processor, causing the processor to perform the operations of the method according to any one of claims 1 to 9

11. A computer device, comprising a memory and a processor, the memory storing a computer program, the computer program, when executed by the processor, causing the processor to perform the operations of the method according to any one of claims 1 to 9.

## Patentansprüche

1. Verfahren zur Erkennung von Sprachschlüsselwörtern, das von einem Benutzerterminal oder einem Server durchgeführt wird und Operationen umfasst:
Bestimmen erster Sprachsegmente auf der Grundlage eines zu erkennenden Sprachsignals;
Bestimmen einer ersten Wahrscheinlichkeit, die jedem der ersten Sprachsegmente entspricht, unter Verwendung eines voreingestellten ersten Klassifikationsmodells, wobei die erste Wahrscheinlichkeit eine Wahrscheinlichkeit für jede von vorbestimmten Wortsegmentierungseinheiten eines vorbestimmten Schlüsselworts umfasst, dass das erste Sprachsegment der jeweiligen vorbestimmten Wortsegmentierungseinheit entspricht;
Bestimmen zweiter Sprachsegmente auf der Grundlage des zu erkennenden Sprachsignals und Erzeugen einer ersten Vorhersagecharakteristik jedes der zweiten Sprachsegmente auf der Grundlage von ersten Wahrscheinlichkeiten, die ersten Sprachsegmenten entsprechen, die dem zweiten Sprachsegment entsprechen;
Durchführen einer Klassifizierung auf der Grundlage der ersten Vorhersagecharakteristik unter Verwendung eines voreingestellten zweiten Klassifikationsmodells, um eine zweite Wahrscheinlichkeit zu bestimmen, die jedem der zweiten Sprachsegmente entspricht, wobei die zweite Wahrscheinlichkeit mindestens eines von einer Wahrscheinlichkeit, dass das zweite Sprachsegment dem vorbestimmten Schlüsselwort entspricht, und einer Wahrscheinlichkeit, dass das zweite Sprachsegment nicht dem vorbestimmten Schlüsselwort entspricht, umfasst; und
Bestimmen, ob das zu erkennende Sprachsignal das vorbestimmte Schlüsselwort umfasst auf der Grundlage der zweiten Wahrscheinlichkeit,.

2. Verfahren nach Anspruch 1, wobei in einem Fall, in dem auf der Grundlage der ersten Wahrscheinlichkeit und einer vorbestimmten Entscheidungslogik bestimmt wird, dass das zu erkennende Sprachsignal das vorbestimmte Schlüsselwort umfasst, der Vorgang des Bestimmens zweiter Sprachsegmente auf der Grundlage des zu erkennenden Sprachsignals durchgeführt wird.

3. Verfahren nach Anspruch 2, wobei das Bestimmen, basierend auf der ersten Wahrscheinlichkeit und der vorbestimmten Entscheidungslogik, dass das zu erkennende Sprachsignal das vorbestimmte Schlüsselwort umfasst, umfasst:
Bestimmen einer aktuellen zu erkennenden Wortsegmentierungseinheit, wobei die aktuelle zu erkennende Wortsegmentierungseinheit eine vorderste vorbestimmte Wortsegmentierungseinheit unter den vorbestimmten Wortsegmentierungseinheiten ist, die in einer Reihenfolge in dem vorbestimmten Schlüsselwort angeordnet sind, die nicht als eine zu erkennende Wortsegmentierungseinheit verwendet worden ist;
Bestimmen eines aktuellen zu bestimmenden Sprachsegments, wobei das aktuelle zu bestimmende Sprachsegment ein vorderstes erstes Sprachsegment unter den ersten Sprachsegmenten ist, die in einer Reihenfolge in dem zu erkennenden Sprachsignal angeordnet sind, das nicht als ein zu bestimmendes Sprachsegment verwendet worden ist;
Zurückkehren zu dem Vorgang des Bestimmens einer aktuellen zu erkennenden Wortsegmentierungseinheit in einem Fall, dass eine Wahrscheinlichkeit, dass das aktuelle zu erkennende Sprachsegment der aktuellen zu erkennenden Wortsegmentierungseinheit entspricht, größer als ein vorbestimmter Schwellenwert ist und die aktuelle zu erkennende Wortsegmentierungseinheit keine letzte vorbestimmte Wortsegmentierungseinheit in dem vorbestimmten Schlüsselwort ist; und
Bestimmen, dass das zu erkennende Sprachsignal das vorbestimmte Schlüsselwort umfasst, in einem Fall, in dem die Wahrscheinlichkeit, dass das aktuelle zu erkennende Sprachsegment der aktuellen zu erkennenden Wortsegmentierungseinheit entspricht, größer ist als der vorbestimmte Schwellenwert und die aktuelle zu erkennende Wortsegmentierungseinheit die letzte vorbestimmte Wortsegmentierungseinheit in dem vorbestimmten Schlüsselwort ist.

4. Verfahren nach Anspruch 3, ferner umfassend:
Zurückkehren zum Vorgang des Bestimmens eines aktuellen zu bestimmenden Sprachsegments in einem Fall, dass die Wahrscheinlichkeit, dass das aktuelle zu bestimmende Sprachsegment der aktuellen zu erkennenden Wortsegmentierungseinheit entspricht, kleiner oder gleich dem vorbestimmten Schwellenwert ist und eine zu erkennende Wortsegmentierungseinheit, die einer vorherigen Bestimmung entspricht, dass die Wahrscheinlichkeit größer als der vorbestimmte Schwellenwert ist, in einem aktiven Zustand ist; und
Bestimmen der vordersten vorbestimmten Wortsegmentierungseinheit unter den vorbestimmten Wortsegmentierungseinheiten des vorbestimmten Schlüsselworts als die aktuell zu erkennende Wortsegmentierungseinheit und Zurückkehren zu dem Vorgang des Bestimmens eines aktuellen zu bestimmenden Sprachsegments in einem Fall, dass die Wahrscheinlichkeit, dass das aktuelle zu bestimmende Sprachsegment der aktuellen zu erkennenden Wortsegmentierungseinheit entspricht, kleiner oder gleich dem vorbestimmten Schwellenwert ist und die zu erkennende Wortsegmentierungseinheit, die der vorherigen Bestimmung entspricht, dass die Wahrscheinlichkeit größer als der vorbestimmte Schwellenwert ist, in einem ungültigen Zustand ist.

5. Verfahren nach Anspruch 1, wobei eine Bestimmung des ersten Klassifikationsmodells umfasst:
Bestimmen von Beispielsprachsignalen auf der Grundlage eines vorbestimmten Korpus, wobei das vorbestimmte Korpus ein allgemeines Korpus umfasst;
Bestimmen dritter Sprachsegmente auf der Grundlage der Beispielsprachsignale;
Bestimmen einer ersten akustischen Eigenschaft jedes der dritten Sprachsegmente und einer dritten Wahrscheinlichkeit, die jedem der dritten Sprachsegmente entspricht, wobei die dritte Wahrscheinlichkeit eine Wahrscheinlichkeit umfasst, dass das dritte Sprachsegment jeder der vorbestimmten Wortsegmentierungseinheiten des vorbestimmten Schlüsselworts entspricht; und
Trainieren eines vorbestimmten ersten neuronalen Netzwerkmodells auf der Grundlage der ersten akustischen Eigenschaft jedes der dritten Sprachsegmente und der dritten Wahrscheinlichkeit, um das erste Klassifikationsmodell zu bestimmen.

6. Verfahren nach Anspruch 5, wobei die Bestimmung des zweiten Klassifikationsmodells umfasst:
Bestimmen von vierten Sprachsegmenten auf der Grundlage der Beispielsprachsignale;
Erzeugen einer zweiten Vorhersagecharakteristik für jedes der vierten Sprachsegmente auf der Grundlage von dritten Wahrscheinlichkeiten, die dritten Sprachsegmenten entsprechen, die dem vierten Sprachsegment entsprechen;
Bestimmen einer vierten Wahrscheinlichkeit, die jedem der vierten Sprachsegmente entspricht, wobei die vierte Wahrscheinlichkeit mindestens eines von einer Wahrscheinlichkeit, dass das vierte Sprachsegment dem vorbestimmten Schlüsselwort entspricht, und einer Wahrscheinlichkeit, dass das vierte Sprachsegment nicht dem vorbestimmten Schlüsselwort entspricht, umfasst; und
Trainieren eines vorbestimmten zweiten neuronalen Netzwerkmodells auf der Grundlage der zweiten Vorhersagecharakteristik jedes der vierten Sprachsegmente und der vierten Wahrscheinlichkeit, um das zweite Klassifikationsmodell zu bestimmen.

7. Verfahren nach Anspruch 1, wobei das Verfahren vor dem Erzeugen einer ersten Vorhersagecharakteristik jedes der zweiten Sprachsegmente auf der Grundlage von ersten Wahrscheinlichkeiten, die ersten Sprachsegmenten entsprechen, die dem zweiten Sprachsegment entsprechen, ferner umfasst:
Bestimmen einer zweiten akustischen Charakteristik jedes der zweiten Sprachsegmente; und
das Erzeugen einer ersten Vorhersagecharakteristik jedes der zweiten Sprachsegmente auf der Grundlage von ersten Wahrscheinlichkeiten, die ersten Sprachsegmenten entsprechen, die dem zweiten Sprachsegment entsprechen, umfasst:
Erzeugen der ersten Vorhersagecharakteristik jedes der zweiten Sprachsegmente auf der Grundlage der zweiten akustischen Charakteristik des zweiten Sprachsegments und der ersten Wahrscheinlichkeiten, die den ersten Sprachsegmenten entsprechen, die dem zweiten Sprachsegment entsprechen.

8. Verfahren nach Anspruch 1, wobei die vorbestimmten Wortsegmentierungseinheiten des vorbestimmten Schlüsselworts bestimmt werden durch:
Durchführen einer Wortsegmentierungsverarbeitung an dem vorbestimmten Schlüsselwort gemäß einer vorbestimmten Wortsegmentierungsweise, um die vorbestimmten Wortsegmentierungseinheiten des vorbestimmten Schlüsselworts zu bestimmen, wobei die vorbestimmte Wortsegmentierungsweise mindestens eines von nach Silben, nach Phonemen und nach Wörtern umfasst.

9. Verfahren nach einem der Ansprüche 1 bis 8, wobei das erste Klassifikationsmodell kaskadierte Unterklassifikationsmodelle umfasst und die Anzahl der Ebenen der Unterklassifikationsmodelle größer als oder gleich 2 ist.

10. Computerlesbares Speichermedium, das ein Computerprogramm speichert, wobei das Computerprogramm, wenn es von einem Prozessor ausgeführt wird, den Prozessor veranlasst, die Operationen des Verfahrens nach einem der Ansprüche 1 bis 9 durchzuführen.

11. Computervorrichtung mit einem Speicher und einem Prozessor, wobei der Speicher ein Computerprogramm speichert und das Computerprogramm, wenn es von dem Prozessor ausgeführt wird, den Prozessor veranlasst, die Operationen des Verfahrens nach einem der Ansprüche 1 bis 9 durchzuführen.

## Revendications

1. Procédé de reconnaissance de mots-clés vocaux réalisé par un terminal utilisateur ou un serveur, comprenant les opérations suivantes :
déterminer des premiers segments vocaux sur la base d'un signal vocal à reconnaître ;
déterminer une première probabilité correspondant à chacun des premiers segments vocaux en utilisant un premier modèle de classification prédéfini, la première probabilité comprenant une probabilité, pour chacune d'unités de segmentation de mots prédéterminés d'un mot-clé prédéterminé, que le premier segment vocal corresponde à l'unité de segmentation de mots prédéterminés respective ;
déterminer des deuxièmes segments vocaux sur la base du signal vocal à reconnaître, et générer une première caractéristique de prédiction de chacun des deuxièmes segments vocaux sur la base de premières probabilités correspondant à des premiers segments vocaux qui correspondent au deuxième segment vocal ;
réaliser une classification sur la base de la première caractéristique de prédiction en utilisant un deuxième modèle de classification prédéfini, pour déterminer une deuxième probabilité correspondant à chacun des deuxièmes segments vocaux, la deuxième probabilité comprenant une probabilité que le deuxième segment vocal corresponde au mot-clé prédéterminé et/ou une probabilité que le deuxième segment vocal ne corresponde pas au mot-clé prédéterminé ; et
déterminer, sur la base de la deuxième probabilité, si le signal vocal à reconnaître comprend le mot-clé prédéterminé.

2. Procédé selon la revendication 1, dans lequel, dans le cas où il est déterminé, sur la base de la première probabilité et d'une logique de décision prédéterminée, que le signal vocal à reconnaître comprend le mot-clé prédéterminé, l'opération de détermination de deuxièmes segments vocaux sur la base du signal vocal à reconnaître est réalisée.

3. Procédé selon la revendication 2, dans lequel la détermination, sur la base de la première probabilité et de la logique de décision prédéterminée, du fait que le signal vocal à reconnaître comprend le mot-clé prédéterminé comprend :
la détermination d'une unité de segmentation de mots à reconnaître courante, dans lequel l'unité de segmentation de mots à reconnaître courante est une unité de segmentation de mots prédéterminés la plus en avant parmi les unités de segmentation de mots prédéterminés qui sont agencées selon un certain ordre dans le mot-clé prédéterminé, qui n'a pas été utilisée comme unité de segmentation de mots à reconnaître ;
la détermination d'un segment vocal à déterminer courant, dans lequel le segment vocal à déterminer courant est un premier segment vocal le plus en avant des premiers segments vocaux qui sont agencés selon un certain ordre dans le signal vocal à reconnaître, qui n'a pas été utilisé comme segment vocal à déterminer ;
le retour à l'opération de détermination d'une unité de segmentation de mots à reconnaître courante, dans le cas où une probabilité que le segment vocal à déterminer courant corresponde à l'unité de segmentation de mots à reconnaître courante est supérieure à un seuil prédéterminé et que l'unité de segmentation de mots à reconnaître courante n'est pas une dernière unité de segmentation de mots prédéterminés dans le mot-clé prédéterminé ; et
la détermination du fait que le signal vocal à reconnaître comprend le mot-clé prédéterminé, dans le cas où la probabilité que le segment vocal à déterminer courant corresponde à l'unité de segmentation de mots à reconnaître courante est supérieure au seuil prédéterminé et que l'unité de segmentation de mots à reconnaître courante est la dernière unité de segmentation de mot prédéterminé dans le mot-clé prédéterminé.

4. Procédé selon la revendication 3, comprenant en outre :
le retour à l'opération de détermination d'un segment vocal à déterminer courant, dans le cas où la probabilité que le segment vocal à déterminer courant corresponde à l'unité de segmentation de mots à reconnaître courante est inférieure ou égale au seuil prédéterminé et qu'une unité de segmentation de mots à reconnaître correspondant à une détermination antérieure du fait que la probabilité est supérieure au seuil prédéterminé est dans un état actif ; et
la détermination de l'unité de segmentation de mots prédéterminés la plus en avant parmi les unités de segmentation de mots prédéterminés du mot-clé prédéterminé comme unité de segmentation de mots à reconnaître courante et le retour à l'opération de détermination d'un segment vocal à déterminer courant, dans le cas où la probabilité que le segment vocal à déterminer courant corresponde à l'unité de segmentation de mots à reconnaître courante est inférieure ou égale au seuil prédéterminé et que l'unité de segmentation de mots à reconnaître correspondant à la détermination antérieure du fait que la probabilité est supérieure au seuil prédéterminé est dans un état non valide.

5. Procédé selon la revendication 1, dans lequel la détermination du premier modèle de classification comprend :
la détermination d'échantillons de signaux vocaux sur la base d'un corpus prédéterminé, dans lequel le corpus prédéterminé comprend un corpus général ;
la détermination de troisièmes segments vocaux sur la base des échantillons de signaux vocaux ;
la détermination d'une première caractéristique acoustique de chacun des troisièmes segments vocaux et d'une troisième probabilité correspondant à chacun des troisièmes segments vocaux, dans lequel la troisième probabilité comprend une probabilité que le troisième segment vocal corresponde à chacune des unités de segmentation de mots prédéterminés du mot-clé prédéterminé ; et
l'entraînement d'un premier modèle de réseau neuronal prédéterminé sur la base de la première caractéristique acoustique de chacun des troisièmes segments vocaux et de la troisième probabilité, pour déterminer le premier modèle de classification.

6. Procédé selon la revendication 5, dans lequel la détermination du deuxième modèle de classification comprend :
la détermination de quatrièmes segments vocaux sur la base des échantillons de signaux vocaux ;
la génération d'une deuxième caractéristique de prédiction de chacun des quatrièmes segments vocaux sur la base de troisièmes probabilités correspondant à des troisièmes segments vocaux qui correspondent au quatrième segment vocal ;
la détermination d'une quatrième probabilité correspondant à chacun des quatrièmes segments vocaux, dans lequel la quatrième probabilité comprend au moins une parmi une probabilité que le quatrième segment vocal corresponde au mot-clé prédéterminé et une probabilité que le quatrième segment vocal ne corresponde pas au mot-clé prédéterminé ; et
l'entraînement d'un deuxième modèle de réseau neuronal prédéterminé sur la base de la deuxième caractéristique de prédiction de chacun des quatrièmes segments vocaux et de la quatrième probabilité, pour déterminer le deuxième modèle de classification.

7. Procédé selon la revendication 1, dans lequel avant la génération d'une première caractéristique de prédiction de chacun des deuxièmes segments vocaux sur la base de premières probabilités correspondant à des premiers segments vocaux qui correspondent au deuxième segment vocal, le procédé comprend en outre :
la détermination d'une deuxième caractéristique acoustique de chacun des deuxièmes segments vocaux ; et
la génération d'une première caractéristique de prédiction de chacun des deuxièmes segments vocaux sur la base de premières probabilités correspondant à des premiers segments vocaux qui correspondent au deuxième segment vocal comprend :
la génération de la première caractéristique de prédiction de chacun des deuxièmes segments vocaux sur la base de la deuxième caractéristique acoustique du deuxième segment vocal et des premières probabilités correspondant aux premiers segments vocaux qui correspondent au deuxième segment vocal.

8. Procédé selon la revendication 1, dans lequel les unités de segmentation de mots prédéterminés du mot-clé prédéterminé sont déterminées :
en réalisant un traitement de segmentation de mots sur le mot-clé prédéterminé selon une méthode de segmentation de mots prédéterminés, pour déterminer les unités de segmentation de mots prédéterminés du mot-clé prédéterminé, dans lequel la méthode de segmentation de mots prédéterminés comprend au moins l'un des cas suivants : par syllabes, par phonèmes et par mots.

9. Procédé selon l'une quelconque des revendications 1 à 8, dans lequel le premier modèle de classification comprend des modèles de sous-classification en cascade les uns par rapport aux autres, et le nombre de niveaux des modèles de sous-classification est supérieur ou égal à 2.

10. Support de stockage lisible par ordinateur, stockant un programme informatique, le programme informatique, lorsqu'il est exécuté par un processeur, amenant le processeur à réaliser les opérations du procédé selon l'une quelconque des revendications 1 à 9.

11. Dispositif informatique, comprenant une mémoire et un processeur, la mémoire stockant un programme informatique, le programme informatique, lorsqu'il est exécuté par le processeur, amenant le processeur à réaliser les opérations du procédé selon l'une quelconque des revendications 1 à 9.
